# EUROPEAN PATENT SPECIFICATION

(11) **EP 1 954 026 B1**
(45) Date of publication and mention of the grant of the patent: **31.10.2012**
(21) Application number: 07253705.3
(22) Date of filing: 19.09.2007
(51) Int. Cl.: H04N 1/46

(54) **Signal processing integrated circuit, image reading device, and image forming apparatus**
Integrierte Signalverarbeitungsschaltung, Bildlesevorrichtung und Bilderzeugungsvorrichtung
Circuit intégré de traitement de signal, dispositif de lecture d'image, et appareil de formation d'image

(30) Priority: 19.09.2006 JP 2006252941
(43) Date of publication of application: 06.08.2008
(73) Proprietor: Ricoh Company, Ltd., Tokyo 143-8555 (JP)
(72) Inventor: Kanno, Tohru, Ohta-ku Tokyo 143-8555 (JP); Tsukahara, Hajime, Ohta-ku Tokyo 143-8555 (JP)
(74) Representative: Mounteney, Simon James

(56) References cited:
- EP-A- 1 168 814
- GB-A- 2 149 988
- JP-A- 63 064 480
- JP-A- 63 122 356
- US-A1- 2004 032 628
- US-A1- 2004 057 087
- US-B1- 6 717 617

## Description

### BACKGROUND OF THE INVENTION

### 1. Field of the Invention

The present invention relates to a signal processing integrated circuit, an image reading device, and an image forming apparatus.

### 2. Description of the Related Art

Image forming apparatuses such as copiers, facsimile machines, and multifunction products (MFPs) often include an image reading unit. Such image reading units or image reading devices read image data as electrical signals, amplify the electrical signals, and convert the amplified signals to digital image data. For example, Japanese Patent No. 3262609 discloses a conventional image reading device that includes a scanning optical system, a charge coupled device (CCD), an image signal processing circuit, and a shading correction circuit. The scanning optical system forms a reduced image by scanning an original. The CCD is a line sensor that sequentially converts image data line by line. The image signal processing circuit amplifies an analog image signal output from the CCD and then converts it to digital image data. The shading correction circuit corrects variation in light distribution of a light source in the scanning optical system and sensitivity of each pixel constituting each line of the CCD for the digital signal.

Japanese Patent Application Laid-Open No. 2000-122188 discloses another conventional image reading device that reads a color image of an original using a color linear image sensor. The color linear image sensor converts image data decomposed into three color components of red (R), green (G), and blue (B) to electrical signals. A variable gain amplifier amplifies the analog signals of respective colors, and an analog-to-digital (A/D) converter converts the analog signals to digital signals. The digital signals are output to a shading correction circuit.

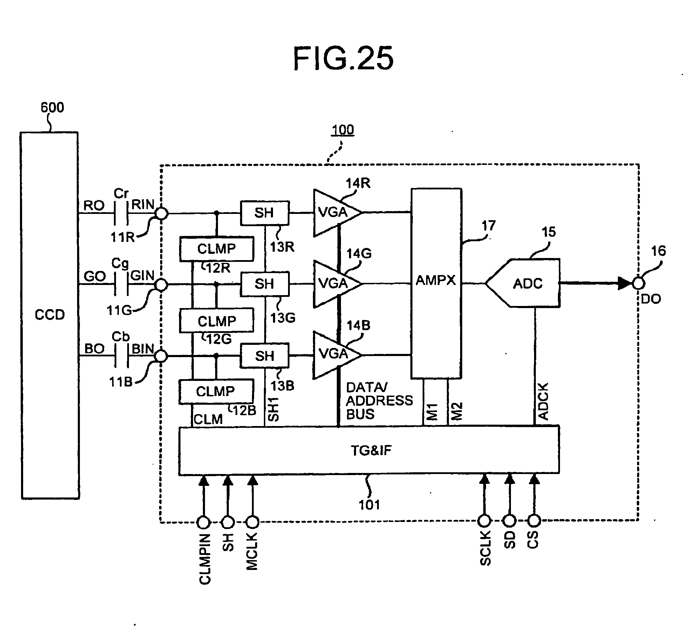

An example of a conventional image signal processing integrated circuit (IC) 100 used in such a color image reading device is shown in Fig. 25. In this example, a CCD 600 is used as a color linear image sensor that reads image data of an original and outputs image signals (analog image signals) RO, GO, and BO of three primary colors, red, green, and blue. The image signal processing IC 100 receives the analog image signals RO, GO, and BO corresponding to three colors output by the CCD 600 through capacitors Cr, Cg, and Cb, respectively.

The image signal processing IC 100 includes clamp circuits (CLMP) 12R, 12G, and 12B, sample-and-hold circuits (SH) 13R, 13G, and 13B, , and variable gain amplifiers (VGA) 14R, 14G, and 14B. The clamp circuits 12R, 12G, and 12B define electric potentials of input terminals after alternating current (AC) coupling for input signals RIN, GIN, and BIN input through input terminals 11R, 11G, and 11B, respectively. The sample-and-hold circuits 13R, 13G, and 13B extract only a signal component of a specified range among output signals from the CCD 600. The variable gain amplifiers 14R, 14G, and 14B amplify the respective output signals at a specified gain.

The image signal processing IC 100 further includes an analog multiplexer circuit (AMPX) 17 that converts the output signals of respective colors amplified by the variable gain amplifier 14R, 14G, and 14B to dot sequential signals in the order of RGB by switching corresponding to an AMPX control signals M1 and M2, and an A/D conversion circuit (ADC) 15 that converts the dot-sequential signals to digital signals. The image signal processing IC 100 outputs dot-sequential digital image data DO from an output terminal 16.

A timing generator/interface (TG&IF) circuit 101 controls operating timing of these circuits, and is controlled by a serial interface (serial clock SCLK, serial data SD, and chip select CS). A signal CLMPIN to be input to the TG&IF circuit 101 is a gate signal to control the clamp circuits 12R, 12G, and 12B, a signal SH is a sample clock that allows the sample-and-hold circuits 13R, 13G, and 13B to sample a signal region of an image signal, and a signal MCLK is a reference clock to generate the AMPX control signals M1 and M2 to control the analog multiplexer circuit 17, and a clock signal ADCK to control the A/D conversion circuit 15. These signals CLMPIN, SH, and MCLK are input by a timing-generation application specific integrated circuit (ASIC), and the signals SCLK, SD, and CS are input by a central processing unit (CPU) of an image processing board (not shown).

The variable gain amplifiers 14R, 14G, and 14B each include a register that stores therein a gain setting value set through a data/address bus.

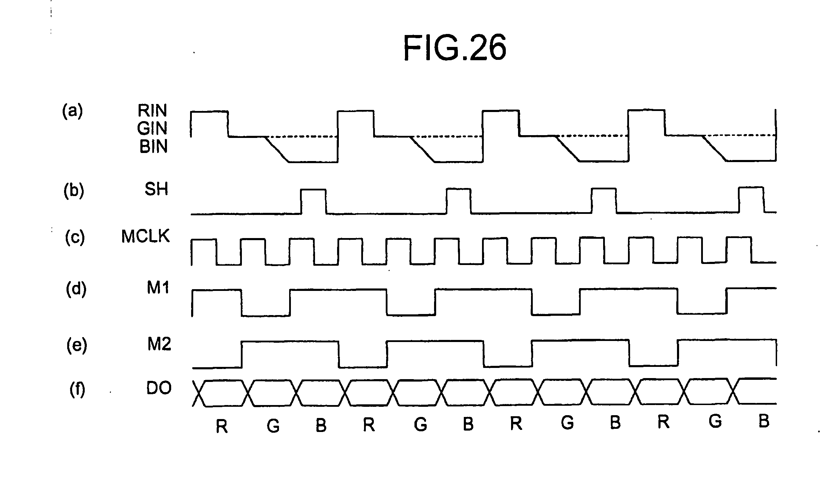

Fig. 26 is a timing chart of the signals. In Fig. 26, (a) corresponds to the signals of respective colors RIN, GIN, and BIN to be input, (b) corresponds to the sample clock SH, (c) corresponds to the reference clock MCLK, (d) and (e) correspond to the AMPX control signals M1 and M2, respectively, and (f) corresponds to the image data DO to be output.

Such a conventional image signal processing 1C is effective for the CCD 600 whose output is one channel per color, being relatively low in a pixel rate (about 20 megahertz to 30 megahertz for one color). However, for a color linear image sensor whose output is two channels or four channels per color and in which a pixel rate is higher, two units or four units of such image signal processing ICs are required. Therefore, it is disadvantageous in terms of both mounting space and component cost. In terms of performance also, there is a problem that since a signal of the same color is fed to more than one image signal processing IC, variations appearing in the same color derived from a difference between processing systems result in a fixed pattern noise.

Us-B1-6 717 617 discloses a signal processing integrated circuit according to the preamble of Claim 1.

### SUMMARY OF THE INVENTION

It is an object of the present invention to at least partially solve the problems in the conventional technology.

According to a first aspect of the present invention, a signal processing integrated circuit comprises the features of Claim 1.

Preferred features of this aspect of the invention are set out in Claims 2 to 11.

According to another aspect of the present invention, an image reading device includes the features of Claim 12.

According to still another aspect of the present invention, an image forming apparatus includes the features or Claim 13.

The above and other objects, features, advantage and technical and industrial significance of this invention will be better understood by reading the hollowing detailed description of presently preferred embodiments of the invention, when considered in connection with the accompanying drawing.

### BRIEF DESCRIPTION OF THE DRAWINGS

Fig. 1 is a block diagram of an image signal processing IC according to a first embodiment of the present invention;
Fig. 2 is a schematic diagram of an example of a scanning optical system of an image reading device according to an embodiment of the present invention;
Fig. 3 is a block diagram of an image signal processing IC according to a second embodiment of the present invention;
Fig. 4 is a timing chart of signals in a normal operation mode of the image signal processing IC shown in Fig. 3;
Fig. 5 is a timing chart of signals in a mode in which input of each color signal of only one system is effective;
Fig. 6 is a block diagram of an image signal processing IC according to a third embodiment of the present invention;
Fig. 7 is a block diagram of an image signal processing IC according to a fourth embodiment of the present invention;
Fig. 8 is a timing chart of signals in the image signal processing IC shown in Fig. 7;
Fig. 9 is a schematic diagram of an exclusive OR circuit that generates an internal signal SAMPLE_I from a sampling start signal SAMPLE and an external input signal POL_S according to a modification of the fourth embodiment;
Fig. 10 is a schematic diagram of another exclusive OR circuit that generates an internal signal HOLD_I from a hold start signal HOLD and the external input signal POL_S;
Fig. 11 is a block diagram of an image signal processing IC according to a fifth embodiment of the present invention;
Fig. 12 is a block diagram of an image signal processing IC according to a sixth embodiment of the present invention;
Fig. 13 is a timing chart of signals representing the operation of a subtraction/integration (SUB&INTG) circuit shown in Fig. 12;
Fig. 14 is a block diagram of an image signal processing IC according to a seventh embodiment of the present invention;
Fig. 15 is a timing chart of signals in the image signal processing IC shown in Fig. 14;
Fig. 16 is a block diagram of an image signal processing IC according to an eighth embodiment of the present invention;
Fig. 17 is a timing chart of signals in the image signal processing IC shown in Fig. 16;
Fig. 18 is a block diagram of an image signal processing IC according to a ninth embodiment of the present invention;
Fig. 19 is a block diagram of an image signal processing IC according to a tenth embodiment of the present invention;
Fig. 20 is a block diagram of an image signal processing IC according to an eleventh embodiment of the present invention;
Fig. 21 is a block diagram of an image signal processing IC according to a twelfth embodiment of the present invention;
Fig. 22 is a block diagram of an image signal processing IC according to a thirteenth embodiment of the present invention;
Fig. 23 is a block diagram of an image reading device including the image signal processing IC according to any one of the embodiments;
Fig. 24 is a schematic diagram of a hardware configuration of an image forming apparatus including the image reading device shown in Fig. 23;
Fig. 25 is a block diagram of an image signal processing IC according to a conventional technology; and
Fig. 26 is a timing chart of signals in the image signal processing IC shown in Fig. 23.

### DETAILED DESCRIPTION OF THE PREFERRED EMBODIMENTS

Exemplary embodiments of the present invention are explained in detail below with reference to the accompanying drawings.

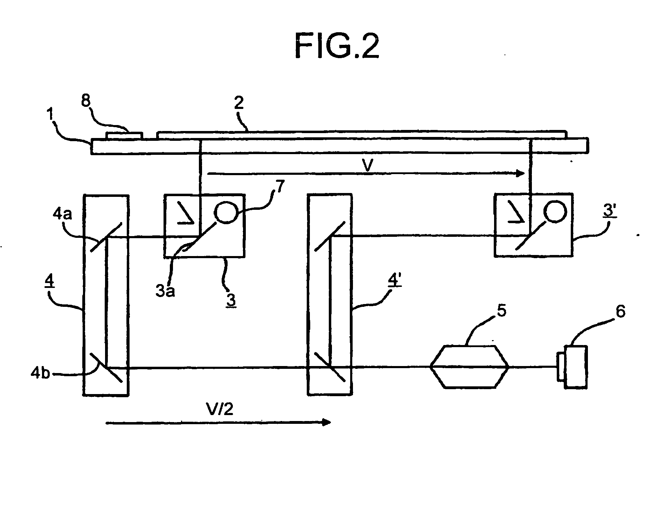

Fig. 2 is a schematic diagram of a scanning optical system according to an embodiment of the present invention. The scanning optical system includes a lighting optical system that is arranged below a document glass 1 and includes a light source 7. An original 2 placed on the document glass 1 is illuminated by the lighting optical system. The light reflected from the original 2 is reflected and deflected by a first mirror 3a of a moving body 3, and then, sequentially reflected and deflected by a first mirror 4a and a second mirror 4b of a second moving body 4 to an imaging lens 5. The imaging lens 5 forms a reduced image on a light-receiving surface of a CCD 6 as a color linear image sensor.

The CCD 6 includes three types of receiving units (photoelectric converting units) that have color filters passing only a red component, a green component, and blue component, respectively, of a color image formed on the light-receiving surface. The CCD 6 outputs analog image signals each corresponding to three primary colors of red, green, and blue from the light receiving units, respectively.

When an original is read, the first moving body 3 moves along a longitudinal direction of the original 2 at a speed V to a position indicated by 3', and simultaneously, the second moving body 4 moves at a half the speed of the first moving body 3, i.e., 1/2 V, to a position indicated by 4'. Thus, the original 2 is read in the longitudinal direction.

On a left end portion of the document glass 1 shown in Fig. 2 is a reference white plate 8 used for generation of shading data and automatic gain adjustment. The reference white plate 8 is to be a reference of a white level of the image reading device. An output level when the reference white plate 8 is read is predetermined as "white-level target value".

A gain of the variable gain amplifier is adjusted so that a reading level of the reference white plate 8 is to be the white-level target value. This is because as wide range as possible in a dynamic range of the A/D conversion circuit in the image signal processing IC is desired to be used.

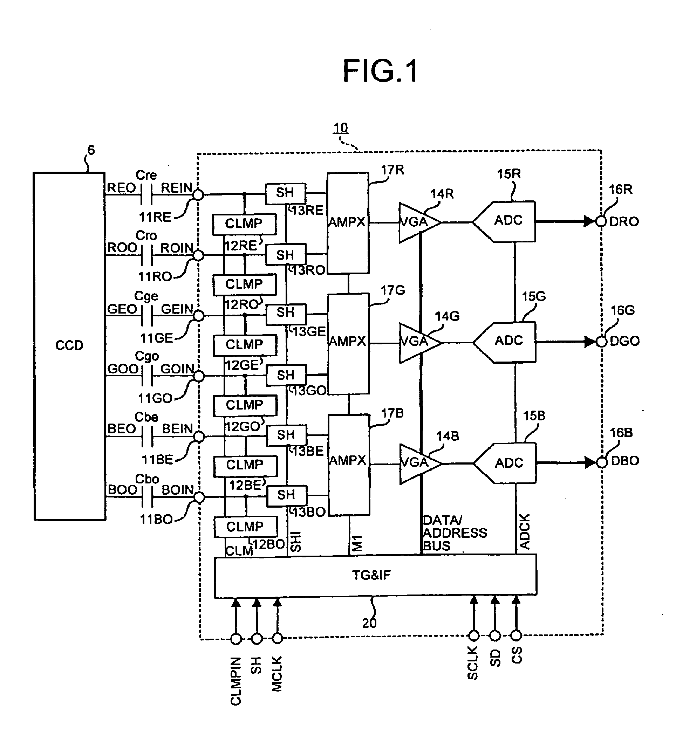

Fig. 1 is a block diagram of an image signal processing IC 10 according to a first embodiment of the present invention.

In Fig. 2, the CCD 6 is a color linear image sensor that outputs an even-numbered pixel signal and an odd-numbered pixel signal for each of the three primary colors, red, green, and blue, i.e., analog image signals REO and ROO, GEO and GOO, and BEO and BOO.

The image signal processing IC 10 receives the analog image signals REO and ROO, GEO and GOO, and BEO and BOO, which are the image reading signals generated two each, through capacitors Cre, Cro, Cge, Cgo, Cbe, and Cbo while performing the AC coupling. The image signal processing IC 10 includes two signal processing systems for each color that include clamp circuits 12RE, 12RO, 12GE, 12GO, 12BE, and 12BO to define electric potentials of input terminals after AC coupling with respect to input signals REIN, ROIN, GEIN, GOIN, BEIN, and BOIN of respective colors input through input terminals 11RE, 11RO, 11GE, 11GO, 11BE, and 11BO, and sample-and-hold circuits 13RE, 13RO, 13GE, 13GO, 13BE, and 13BO that extract only a signal component of a specified range in output signals from the CCD 6. Such two signal processing systems are commonly used in embodiments of the present invention described below.

The image signal processing IC 10 further includes three analog multiplexer circuits 17R, 17G, and 17B that alternately select two output signals from the sample-and-hold circuits of the signal processing system for each color, and multiplex selected signals into a signal of one system per color, variable gain amplifiers 14R, 14G, and 14B that amplify the output signals of respective colors at a fixed or specified gain with respect to each system on the output side that is arranged to be one system per color, and A/D conversion circuits 15R, 15G, and 15B that convert the amplified analog image signals of respective colors to digital signals. The image signal processing IC 10 outputs digital image data DRO, DGO, and DBO that correspond respective systems per color, through output terminals 16R, 16G, and 16B, respectively.

A timing generator/interface circuit 20 controls operating timing of each circuit, similarly to the TG&IF circuit 101 shown in Fig. 25, and receives the same signals CLMPIN, SH, and MCLK as those described above.

For example, the TG&IF circuit 20 receives the sample clock SH for sampling of a signal region and generates an internal sample clock SHI, to control each of the sample-and-hold circuits 13RE, 13RO, 13GE, 13GO, 13BE, and 13BO. Thus, each of the sample-and-hold circuits samples a signal in a period in which the internal sample clock SHI is "H", and holds during a period in which the internal sample clock SHI is "L".

However, the three analog multiplexer circuits 17R, 17G, and 17B output the signals alternately selecting from two input signals, with only one of the AMPX control signal M1 being "H" or "L".

Each of the variable gain amplifiers 14R, 14G, and 14B includes a register that stores therein a gain setting value set through the TG&IF circuit 20 and the data/address bus.

According to the first embodiment, all image signals can be digitalized with a single image signal processing IC for a color linear image sensor that outputs image reading signals of three colors in two systems per color. Therefore, less mounting space is required on a printed circuit board, resulting in higher design flexibility. As just described, because image signals in two systems for each of three colors are processed in the same IC, a difference in characteristics between the processing systems is small. Thus, signal processing can be performed at a low cost without causing a fixed pattern noise.

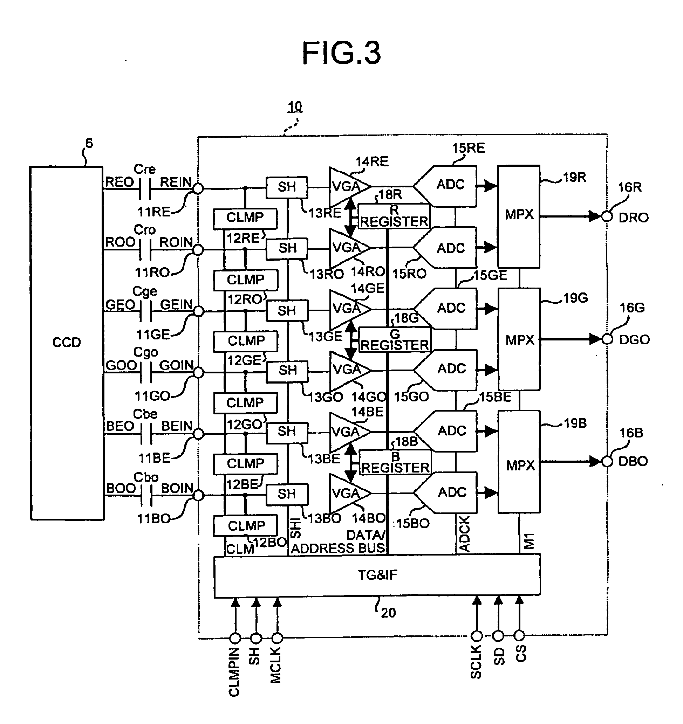

Fig. 3 is a block diagram of an image signal processing IC according to a second embodiment of the present invention. Like reference numerals refer to corresponding portions throughout the drawing, and the same explanations are not repeated. Although the image signal processing IC differs between embodiments described below, the same reference numeral 10 is hereafter used in designating it for convenience.

The CCD 6 is basically the same as previously described in the first embodiment. Further, similarly to the first embodiment, the analog image signals REO and ROO, GEO and GOO, and BEO and BOO are input to the image signal processing IC 10 while performing the AC coupling through the capacitors Cre, Cro, Cge, Cgo, Cbe, and Cbo, and two signal processing systems for each color that include the clamp circuits 12RE, 12RO, 12GE, 12GO, 12BE, and 12BO and the sample-and-hold circuits 13RE, 13RO, 13GE, 13GO, 13BE, and 13BO for the respective input signals REIN, ROIN, GEIN, GOIN, BEIN, and BOIN are provided at an input unit of the image signal processing IC 10.

The image signal processing IC 10 according to the second embodiment further includes, subsequently to the sample holed circuits 13RE, 13RO, 13GE, 13GO, 13BE, and 13BO, two systems per color of variable gain amplifiers 14RE, 14RO, 14GE, 14GO, 14BE, and 14BO, and A/D conversion circuits 15RE, 15RO, 15GE, 15GO, 15BE, and 15BO that convert the amplified analog image signals to digital signals.

In a stage subsequent thereto, the image signal processing IC 10 further includes three multiplexer circuits (MPX) 19R, 19G, and 19B. The multiplexer circuits 19R, 19G, and 19B alternately select two sets of digital image data for each color output from the A/D conversion circuits 15RE, 15RO, 15GE, 15GO, 15BE, and 15BO, and multiplex selected data to generate the digital image data DRO, DGO, and DBO of one system per color. The image signal processing IC 100 outputs the digital image data DRO, DGO, and DBO from the output terminals 16R, 16G, and 16B. In short, in this example, the variable gain amplifier and the A/D conversion circuit are provided in each system on an input side of each of the multiplexer circuits 19R, 19G, and 19B.

In the second embodiment, the image signal processing IC 10 includes an R register 18R, a G register 18G, and a B register 18B each of which stores therein a gain setting value of each color set through the TG&IF circuit 20 and the data/address bus. The variable gain amplifiers 14RE, 14RO, 14GE, 14GO, 14BE, and 14BO amplify the image signals at a gain corresponding to the gain setting value in the register of a corresponding color.

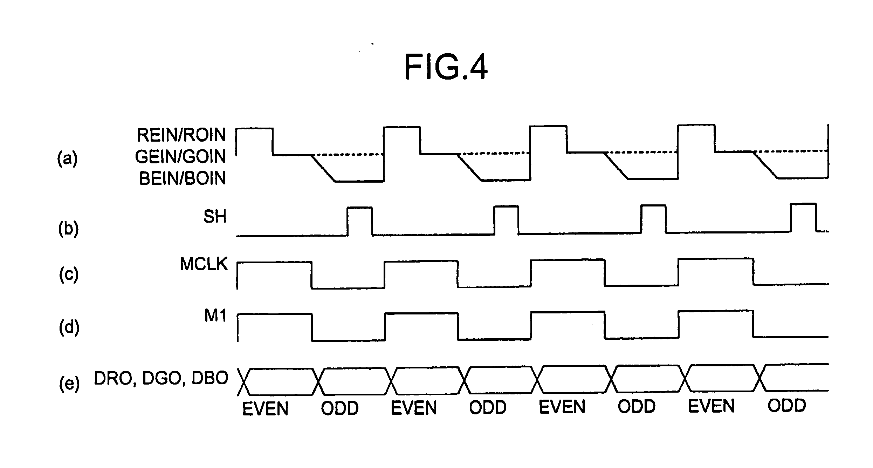

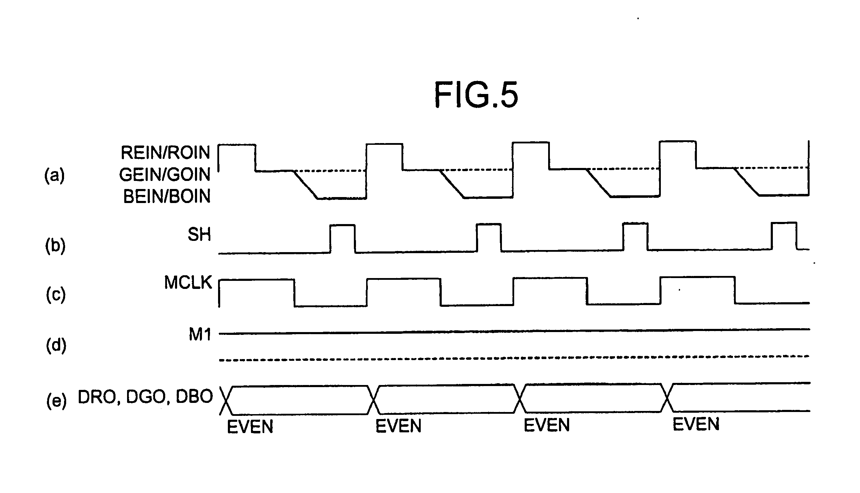

Figs. 4 and 5 are timing charts of signals in a different operation mode according to the second embodiment. In Figs. 4 and 5, (a) corresponds to the signals of respective colors REIN/ROIN, GEIN/GOIN, and BEIN/BOIN to be input, (b) corresponds to the sample clock SH, (c) corresponds to the reference clock MCLK, (d) corresponds to the AMPX control signals M1, and (e) corresponds to the image data DRO, DGO, and DBO to be output.

Fig. 4 depicts the case of the normal operation mode. Inputs from two systems for each color are effective, and image data from an EVEN side and image data from an ODD side are alternately output as the output signals DRO, DGO, and DBO of the multiplexer circuits 19R, 19G, and 19B, corresponding to "H" and "L" of the AMPX control signal M1.

Fig. 5 depicts the case that a mode is selected in which the image signal of only one of two systems is active for each color. That is, the input image signals REIN, GEIN, and BEIN each corresponding to one of two systems are active, and the input image signals ROIN, GOIN, and BOIN of the other system are ignored. Specifically, the AMPX control signal M1 is fixed to "H", and only the image signals input from the EVEN side systems are output as the output signals DRO, DGO, and DBO of the multiplexer circuits 19R, 19G, and 19B of respective colors.

According to the second embodiment, the same image signal processing IC 10 can be used not only for the color linear image sensor that outputs image reading signals of three colors from two systems per color, but also for a color linear image sensor that outputs image reading signals of three colors from one system per color. Therefore, cost of the image signal processing IC can be reduced by mass production.

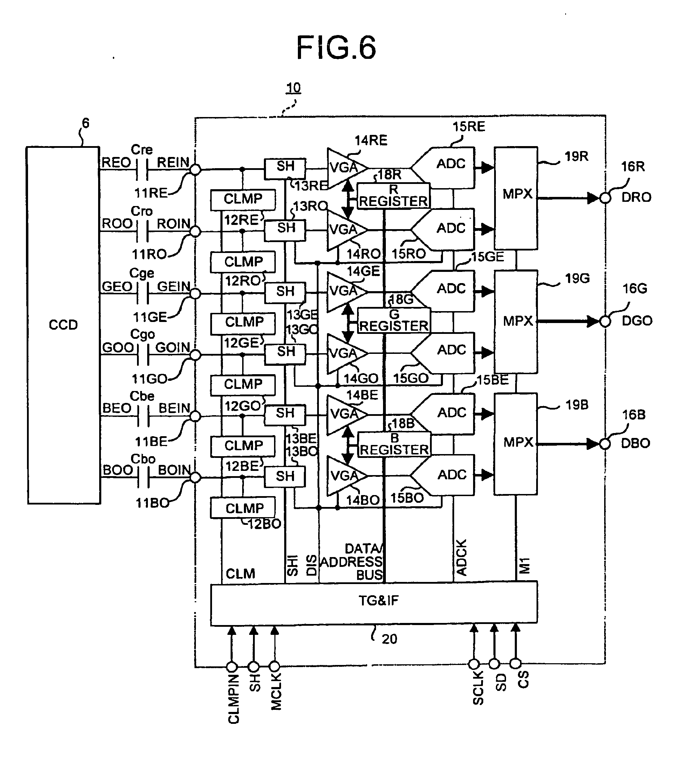

Fig. 6 is a block diagram of an image signal processing IC according to a third embodiment of the present invention. The image signal processing IC 10 of the third embodiment is of basically the same configuration as that of the second embodiment shown in Fig. 3. However, differently from the second embodiment, lines of a block operation control signal DIS from the TG&IF circuit 20 are connected to the sample-and-hold circuits 13RO, 13GO, and 13BO, the variable gain amplifiers 14RO, 14GO, and 14BO, and the A/D conversion circuits 15RO, 15GO, and 15BO in the systems of the input signals ROIN, GOIN, and BOIN of red, green, and blue.

When the mode in which only an image signal from one of the systems is active out of the image signals of two systems is selected, similarly to the second embodiment described above, the AMPX control signal M1 of the multiplexer circuits 19R, 19G, and 19B is fixed to "H", and only data input from the EVEN side is output as the output image data DRO, DGO, and DBO. At the same time, the control signal DIS becomes active, and the sample-and-hold circuits 13RO, 13GO, and 13BO, the variable gain amplifiers 14RO, 14GO, and 14BO, and the A/D conversion circuits 15RO, 15GO, and 15BO being the active circuits of the system (the other system) of the input signals ROIN, GOIN, and BOIN on the ODD side to which the lines are connected are turned into a shutdown mode in which an operation current is cut off, or into a low power mode in which power consumption is lowered.

In this example, since the sample-and-hold circuits, the variable gain amplifiers, and the A/D conversion circuits are provided in two systems per color on the input side of the multiplexer circuits 19R, 19G, and 19B, the operation current of all the active circuits in the system not selected in the multiplexer circuits is cut off or reduced. However, it can be configured to cut off or reduce the operation current of some of the active circuits among the sample-and-hold circuits, the variable gain amplifiers, and the A/D conversion circuits in the system not selected.

If this arrangement is applied to the first embodiment, it can be configured to cut off or reduce the operation current of, for example, the sample-and-hold circuits 13RO, 13GO, and 13BO in the system not selected, among the sample-and-hold circuits provided two for each color on the input side of the analog multiplexer circuits 17R, 17G, and 17B.

According to the third embodiment, the active circuits not in use in the image signal processing IC 10 consumes no power or only a very low level of power. Therefore, overall power consumption can be reduced, and the temperature rise of the IC can be minimized. This improve the reliability of the IC.

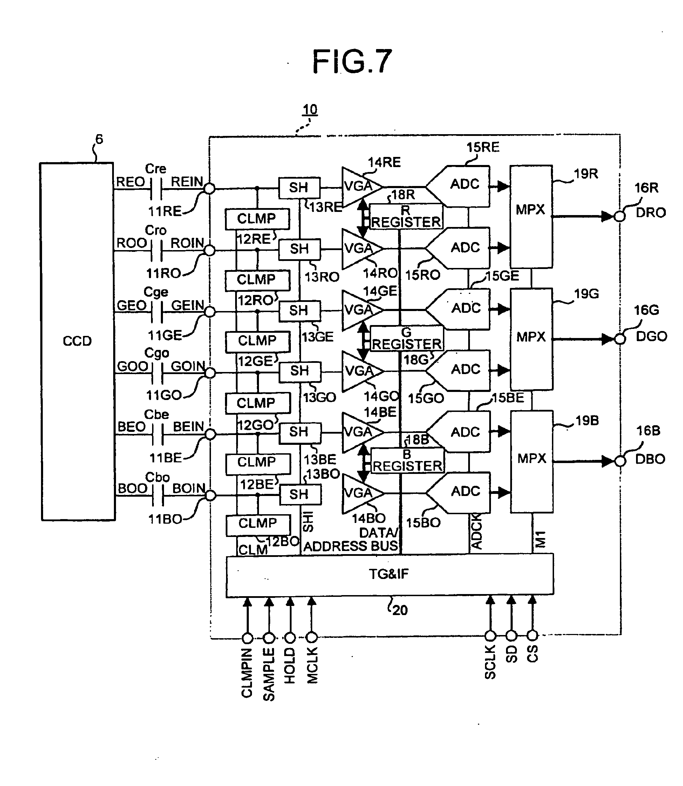

Fig. 7 is a block diagram of an image signal processing IC according to a fourth embodiment of the present invention. The image signal processing IC 10 of the fourth embodiment is also of essentially the same configuration as that of the second embodiment shown in Fig. 3. However, to the TG&IF circuit 20, a sampling start signal SAMPLE and a hold start signal HOLD are input instead of the sample clock SH for sampling of a signal region.

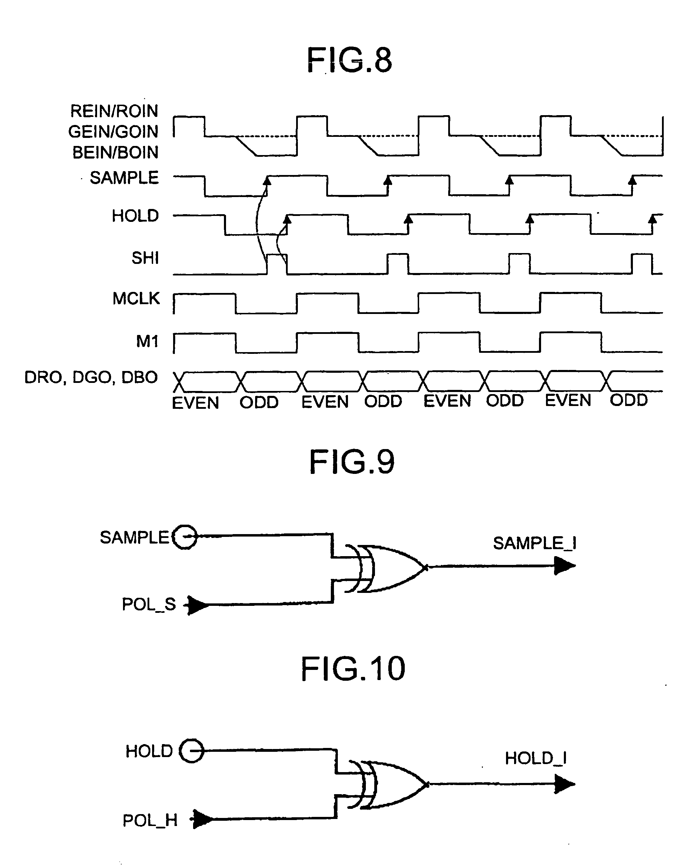

As shown in a timing chart in Fig. 8, the TG&IF circuit 20 generates the internal sample clock SHI that becomes active at a rising edge of the sampling start signal SAMPLE and becomes inactive at a rising edge of the hold start signal HOLD, from two rectangular wave signals of the sampling start signal SAMPLE and the hold start signal HOLD externally input, to control each of the sample-and-hold circuits 13RE, 13RO, 13GE, 13GO, 13 BE, and 13BO shown in Fig. 7. Thus, each of the sample-and-hold circuits samples a signal in the period in which the internal sample clock SHI is "H", and holds in the period in which the internal sample clock SHI is "L".

In other words, sampling start timing and hold start timing of each of the sample-and-hold circuits are determined by the rising edge, which is one of signal edges, of the sampling start signal SAMPLE and the rising edge, which is one of signal edges, of the sample hold signal HOLD, respectively.

In the sample hold control by the sample clock SH, waveform distortion is caused by transmission paths, and an actual sample width can be changed by the waveform (rising, falling, duty, etc.). On the other hand, according to the fourth embodiment, the transmission paths of the sampling start signal and the hold start signal can be matched by using the sampling start signal SAMPLE and the hold start signal HOLD, and therefore, both of the signals can be made in the same waveform as shown in Fig. 8. Thus, the change of the sample width due to the waveforms can be suppressed.

Figs. 9 and 10 depict an exclusive OR circuit that is used when the TG&IF circuit 20 generates the internal sample clock SHI from the sampling start signal SAMPLE and the hold start signal HOLD according to a modification of the fourth embodiment.

Exclusive OR operation is performed on the sampling start signal SAMPLE with a register bit or an external input signal POL_S to generate an internal signal SAPLE_I as shown in Fig. 9. On the other hand, exclusive OR operation is performed on the hold start signal HOLD with a register bit or an external input signal POL_H to generate an internal signal HOLD_I as shown in Fig. 10.

The internal sample clock SHI that becomes active at a rising edge of the internal signal SAMPLE_I and becomes inactive at a rising edge of the internal signal HOLD_I is generated. Each of the sample-and-hold circuits 13RE, 13RO, 13GE, 13GO, 13BE, and 13BO shown in Fig. 7 is controlled with the internal sample clock SHI. Each of the sample-and-hold circuits samples a signal in the period in which the sample clock SHI is "H", and holds in the period in which the sample clock SHI is "L".

By this arrangement, the polarity of active edges (rising/falling) of the sampling start signal SAMPLE and the hold start signal HOLD can be arbitrarily selected. Therefore, radiation noise can be reduced by making both of the signals into reverse phase signals, or when waveform distortion is not a problem with a low speed clock, by supplying a sampling clock of a single signal to a terminal of the sampling start signal and a terminal of the hold start signal to set the polarity of each active edge to reverse polarity, reduction of a transmission path area and clock drivers can be achieved.

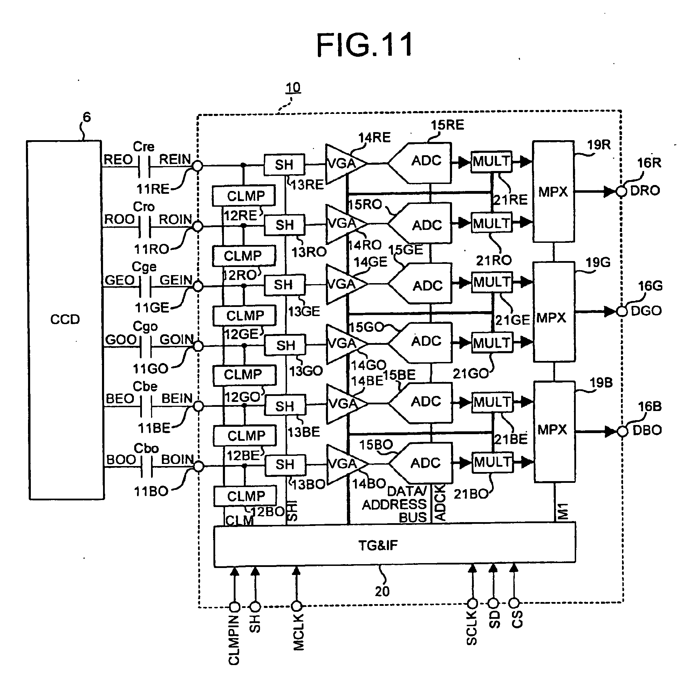

Fig. 11 is a block diagram of n image signal processing IC according to a fifth embodiment of the present invention. The image signal processing IC 10 of the fifth embodiment is also similar in configuration to that of the second embodiment shown in Fig. 3 except for the following points.

In the stage subsequent to the A/D conversion circuits 15RE, 15RO, 15GE, 15GO, 15BE, and 15BO of each signal processing system, coefficient multipliers (MULT) 21RE, 21RO, 21GE, 21GO, 21BE, and 21BO are provided. Each of the variable gain amplifiers 14RE, 14RO, 14GE, 14GO, 14BE, and 14BO has a register that stores therein a gain setting value. Each of the coefficient multipliers also has a register that stores therein a multiplication coefficient.

Each of the variable gain amplifiers 14RE, 14RO, 14GE, 14GO, 14BE, and 14BO and the coefficient multiplications 21RE, 21RO, 21GE, 21GO, 21BE, and 21BO amplifies the analog image signal of each system and multiplies image data converted to digital data by the A/D conversion circuits 15RE, 15RO, 15GE, 15GO, 15BE, and 15BO, corresponding to the gain setting value and the multiplication-coefficient setting value set for respective registers by the TG&IF circuit 20 through the data/address bus.

According to the fifth embodiment, the gain of the variable gain amplifier and the multiplication coefficient of the coefficient multiplier are not determined for each color, but can be set for each of the input signal systems. Therefore, variations in the signal levels of the respective input systems can be absorbed, thereby accurately adjusting the levels of output image data.

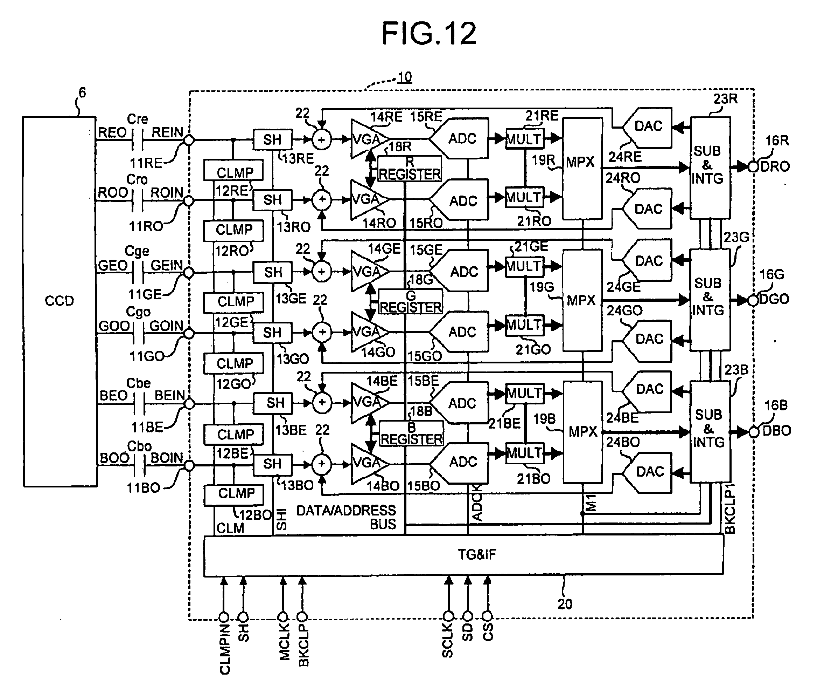

Fig. 12 is a block diagram of an image signal processing IC according to a sixth embodiment of the present invention. In the image signal processing IC 10 according to the sixth embodiment, an adder circuit 22 is arranged between each of the sample holed circuits 13RE, 13RO, 13GE, 13GO, 13BE, and 13BO and each of the variable gain amplifiers 14RE, 14RO, 14GE, 14GO, 14BE, and 14BO, in each of the signal processing systems in the second embodiment shown in Fig. 3.

SUB&INTG circuits 23R, 23G, and 23B are connected to the multiplexer circuits 19R, 19G, and 19B of respective colors on an output side thereof, respectively. The SUB&INTG circuits 23R, 23G, and 23B directly output, to the output terminals 16R, 16G, and 16B, the image data DRO, DGO, and DBO output by the multiplexer circuits 19R, 19G, and 19B, respectively. Digital data obtained as a result of the processing by each of the SUB&INTG circuits 23R, 23G, and 23B is converted back to an analog signal by each of digital/analog (D/A) conversion circuits (DAC) 24RE, 24RO, 24GE, 24GO, 24BE, and 24BO that converts data to an analog signal for each EVEN/ODD, and added to an output of each of the sample holed circuits 13RE, 13RO, 13GE, 13GO, 13BE, and 13BO by each of the adder circuits 22. Thus, the data is input to each of the variable gain amplifiers 14RE, 14RO, 14GE, 14GO, 14BE, and 14BO.

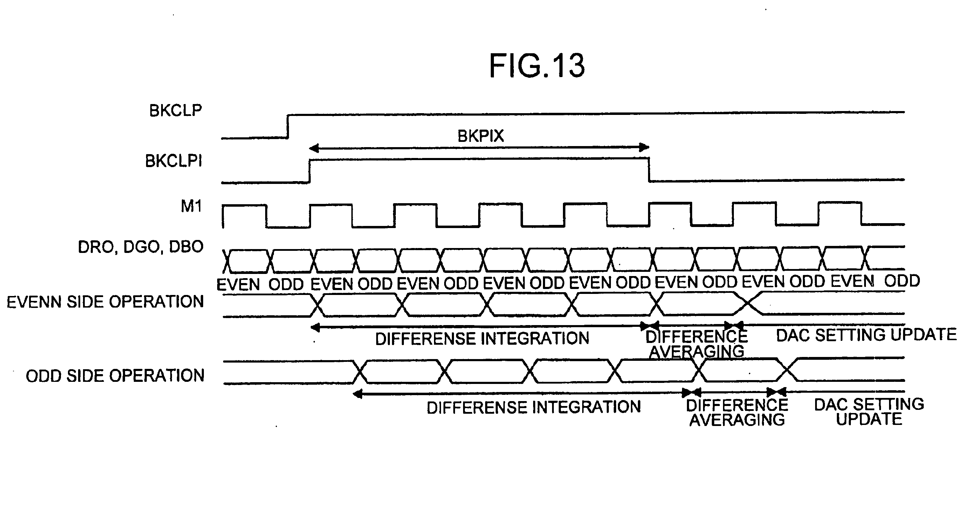

Fig. 13 is a timing chart of signals representing the operation of the SUB&INTG circuit 20.

Based on a trigger signal BKCLP externally input to the TG&IF circuit 20, an internal signal BKCLPI that is active only for a specified offset region BKPIX after the trigger signal BKCLP is generated. An output of the multiplexer circuit of each color in the period in which the internal signal BKCLP is active is separated into EVEN/ODD, and differences of EVEN/ODD from the specified offset level are integrated to obtain a difference sum. Then, the difference sum is averaged, and using the result of difference averaging, a setting value of the D/A conversion circuit is updated. When the DAC setting value is updated, a process such as addition to a present DAC setting value by performing an appropriate operation on the result of the difference averaging, for fluctuation of the offset level due to a noise, or optimization of a response speed.

According to the sixth embodiment, an output offset level of each color can be defined, and saturation inside the image signal processing IC can be avoided. Therefore, the operation can be stabilized, and processing in subsequent stages can be simplified, thereby reducing cost.

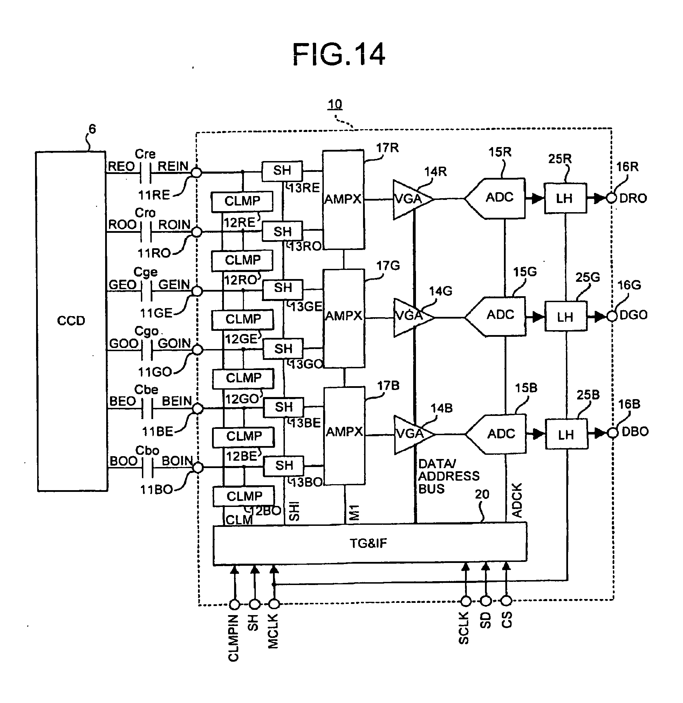

Fig. 14 is a block diagram of an image signal processing IC according to a seventh embodiment of the present invention. The image signal processing IC 10 of the seventh embodiment is of essentially the same configuration as that of the first embodiment shown in Fig. 1, except that latch circuits (LH) 25R, 25G, and 25B that latch the output of the A/D conversion circuits 15R, 15G, and 15B are provided for the output systems, respectively, and the image data DRO, DGO, and DBO latched by the latch circuits 25R, 25G, and 25B are output to the output terminals 16R, 16G, and 16B.

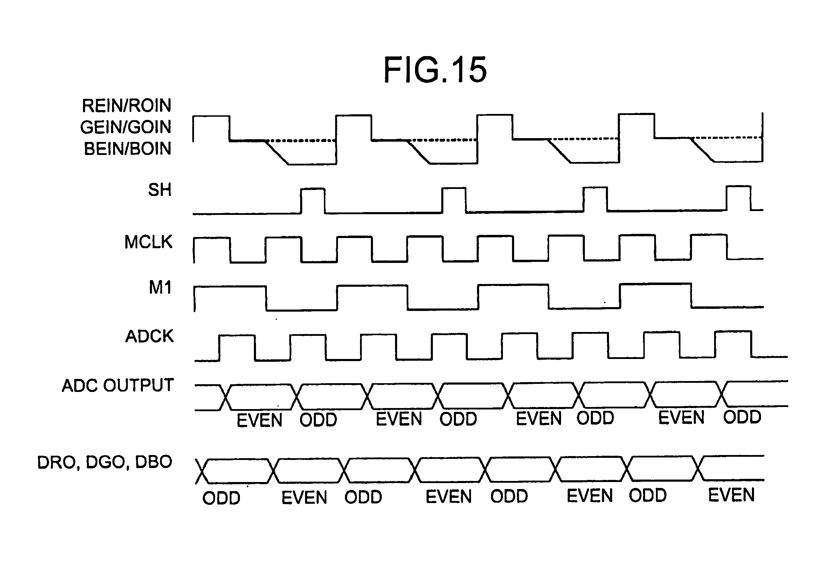

Fig. 15 is a timing chart of signals in the image signal processing IC 10 according to the seventh embodiment.

A conversion clock ADCK of the A/D conversion circuits 15R, 15G, and 15B is generated from a reference clock MCLK having the same frequency as the data rate of output image data. This clock is generated considering a delay in the variable gain amplifiers 14R, 14G, and 14B and the like in the stage preceding to the A/D conversion circuits 15R, 15G, and 15B.

Since the outputs of the A/D conversion circuits 15R, 15G, and 15B are output further delayed from the conversion clock ADCK, the outputs are greatly delayed from the input reference clock MCLK. The latch circuits 25R, 25G, and 25B that are positioned immediately before the output latch the digital image data DRO, DGO, and DBO with input reference clock MCLK. Therefore, the delay from the reference clock MCLK becomes the smallest.

According to the seventh embodiment, digital image data of each color to be output is synchronized with the reference clock. This enables to grasp the delay time and to reduce variations in the delay time. Therefore, a high speed operation is possible. In addition, a timing design in a subsequent stage is facilitated, which shortens a development period and improves the reliability.

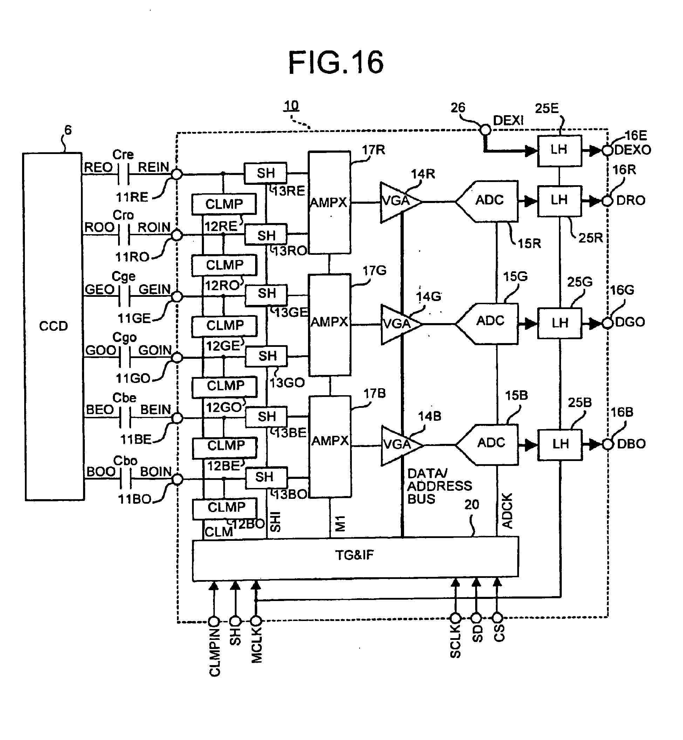

Fig. 16 is a block diagram of an image signal processing IC according to an eighth embodiment of the present invention. The image signal processing IC 10 of the eighth embodiment is of essentially the same configuration as that of the seventh embodiment shown in Fig. 14, except that an external input terminal 26 through which digital data DEXI is input is included, and that the digital data DEXI input thereto is latched by a latch circuit 25EX in a similar manner as the image data of each color and is output through an output terminal 16E as data DEXO.

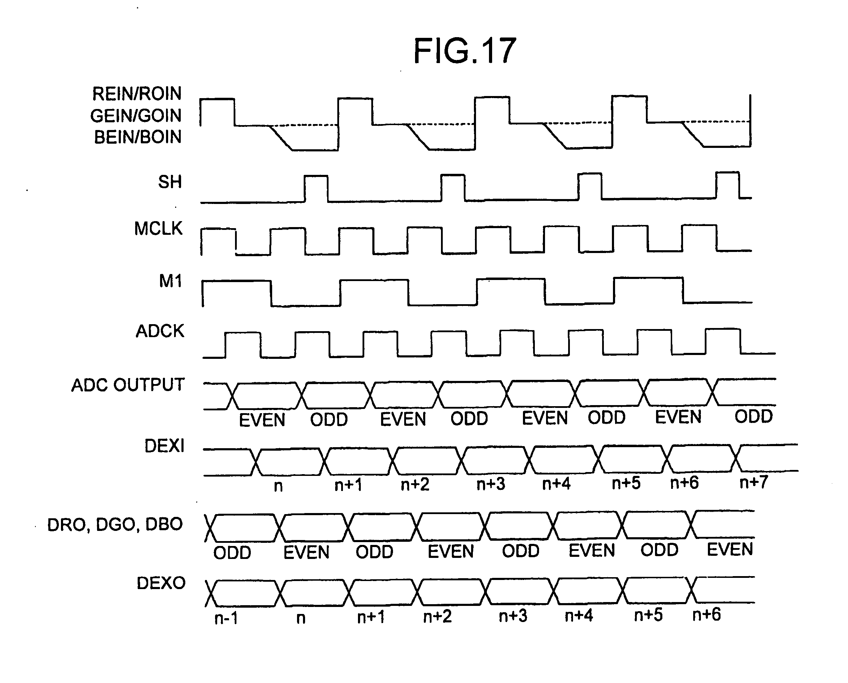

Fig. 17 is a timing chart of signals in the image signal processing IC 10 according to the eighth embodiment.

The conversion clock ADCK of the A/D conversion circuits 15R, 15G, and 15B is generated from a reference clock MCLK having the same frequency as the data rate of output image data. This clock is generated considering a delay in the variable gain amplifiers 14R, 14G, and 14B and the like in the stage preceding to the A/D conversion circuits 15R, 15G, and 15B. Since the digital image data DRO, DGO, and DBO being the outputs of the A/D conversion circuits 15R, 15G, and 15B are output further delayed from the conversion clock ADCK, the outputs are greatly delayed from the input reference clock MCLK.

Further, because the digital data DEXI input through the external input terminal 26 is generated by an external circuit, the digital data DEXI has different delay from the delay of the output data of the A/D conversion circuits 15R, 15G, and 15B. The latch circuits 25R, 25G, 25B, and 25EX latch the digital image data DRO, DGO, and DBO, and the digital data DEXI externally input with the reference clock MCLK. Therefore, the delay from the reference clock MCLK is minimized, and timing of the digital image data DRO, DGO, and DBO, and the digital data DEXI externally input can be matched.

According to the eighth embodiment, combining with the effect of the seventh embodiment described above, definition of output timing of the digital image data of each color and the digital data externally input is facilitated.

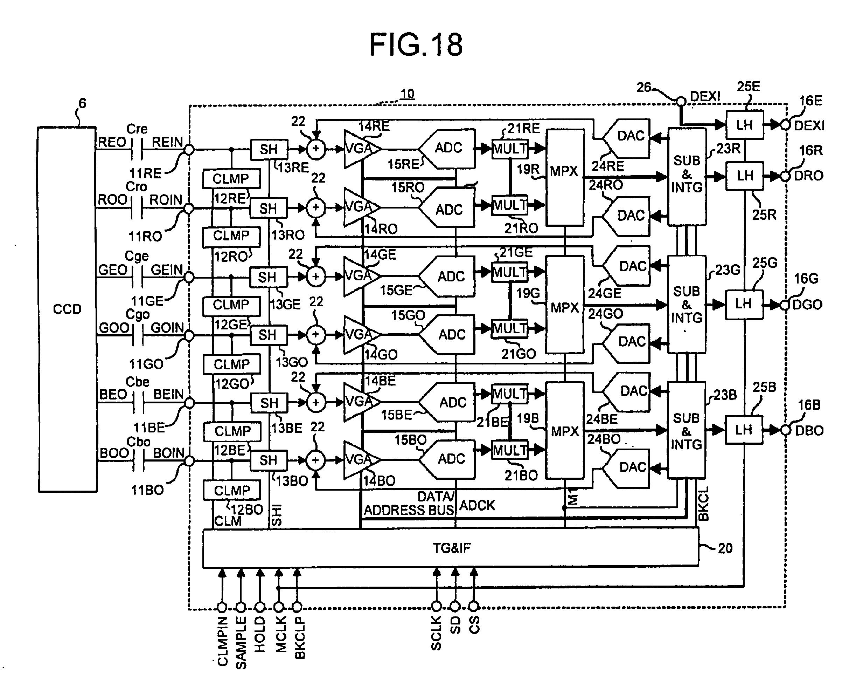

Fig. 18 is a block diagram of an image signal processing IC according to a ninth embodiment of the present invention. The image signal processing IC 10 of the night embodiment is in a way a combination of the fourth, the fifth, and the sixth embodiments. Therefore, all the effects of these embodiments can be achieved.

Specifically, in the image signal processing IC 10, the TG&IF circuit 20 receives the sampling start signal SAMPLE and the hold start signal HOLD, and generates the internal sample clock SHI, and the variable gain amplifiers 14RE, 14RO, 14GE, 14GO, 14BE, and 14BO each having the gain setting resister and the coefficient multipliers 21RE, 21RO, 21GE, 21GO, 21BE, and 21BO each having the coefficient setting register perform the amplification and the coefficient operation.

The SUB&INTG circuits 23R, 23G, and 23B, the D/A conversion circuits 24RE, 24RO, 24GE, 24GO, 24BE, and 24BO, and the adder circuits 22 set a specified offset, and the output timing of the digital image data DRO, DGO, and DBO, and the digital data DEXI input through the external input terminal 26 is synchronized using the latch circuits 25R, 25G, and 25B and the reference clock MCLK having the same frequency as the data rate of the output image data.

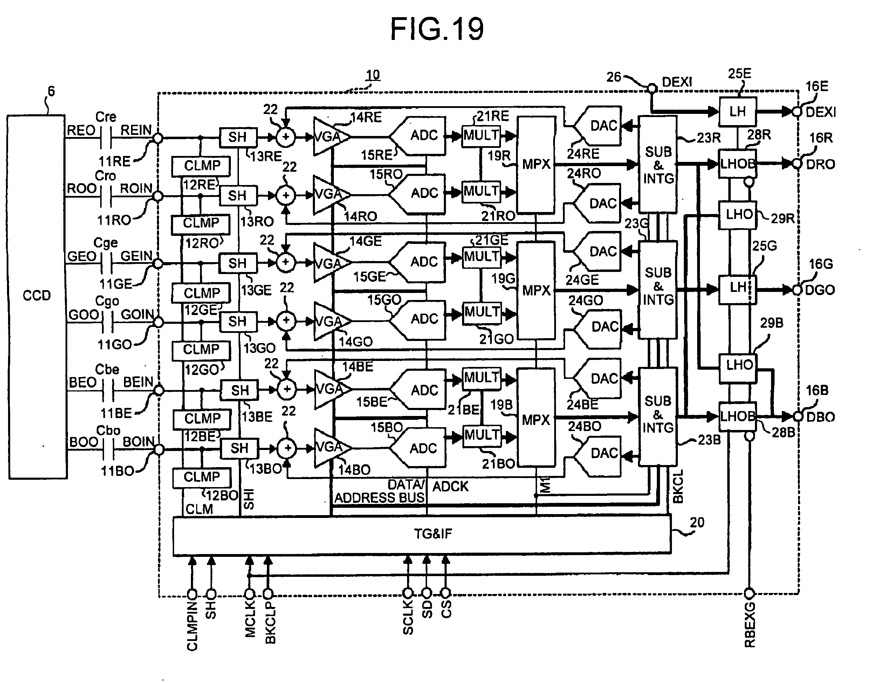

Fig. 19 is a block diagram of an image signal processing IC according to a tenth embodiment of the present invention. The image signal processing IC 10 of the tenth embodiment is of essentially the same configuration as that of the ninth embodiment shown in Fig. 18, except for the following points.

In the image signal processing IC 10 shown in Fig. 19, the latch circuit positioned immediately before the output terminal 16R that outputs the image data DRO in the system of the input signal REIN/ROIN in the circuit shown in Fig. 18 is an output control latch circuit (LHOB) 28R whose output becomes "H" to be high impedance when a control signal is "L". In parallel to this latch circuit, an output control latch circuit (LHO) 29R whose output becomes "L" to be high impedance when the control signal is "H" is connected, and an input terminal thereof is connected to an output terminal of the SUB&INTG circuit 23B in the system of the input signal BEIN/BOIN.

Further, the latch circuit positioned immediately before the output terminal 16B that outputs the image data DBO in the system of the input signal BEIN/BOIN is an output control latch circuit (LHOB) 28B. In parallel to this latch circuit, an output control latch circuit (LHO) 29B is connected, and an input terminal thereof is connected to an output terminal of the SUB&INTG circuit 23R in the system of the input signal REIN/ROIN. Control terminals of the output control latch circuits (LHOB) 28R and 28B and the output control latch circuits (LHO) 29R and 29B are connected to an external terminal RBEXG.

Therefore, when the external terminal RBEXG is set to "L", the output of the SUB&INTG circuit 23R in the system of the input signal REIN/ROIN is output as the output image data DRO, which is the digital data, through the output control latch circuit (LHOB) 28R, and the output of the SUB&INTG circuit 23B in the system of the input signal BEIN/BOIN is output as the output data DBO through the output control latch circuit (LHOB) 28B.

When the external terminal RBEXG is set "H", the output of the SUB&INTG circuit 23B in the system of the input signal BEIN/BOIN is output as the output image data DRO through the output control latch circuit (LHO) 29R, and the output of the SUB&INTG circuit 23R in the system of the input signal REIN/ROIN is output as the output image data DBO through the output control latch circuit (LHO) 29B.

Accordingly, by controlling the external terminal RBEXG, contents of the output image data DRO and DBO can be switched to be output.

According to the tenth embodiment, interline correction that is specific to a three-line color linear image sensor necessary because of the difference in a reading method (flat-base scanning in which a carriage is moved and a sheet through scanning in which an original is moved), in other words correction of the difference in physical positions of lines caused because the order of reading lines of red (R), green (G), and blue (B) by the color linear image sensor becomes opposite, can be performed without an external part added.

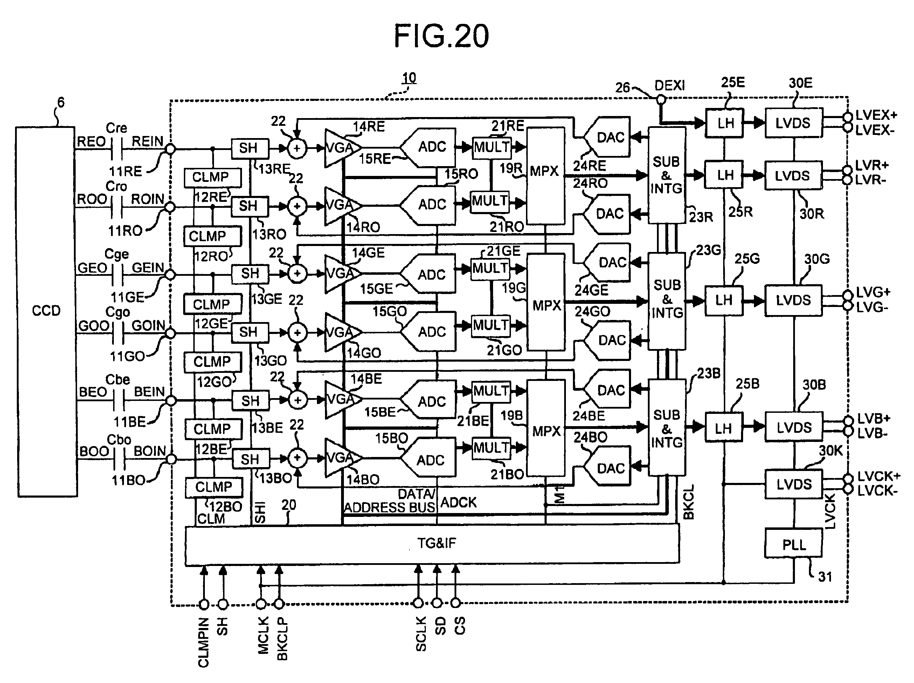

Fig. 20 is a block diagram of an image signal processing IC according to an eleventh embodiment of the present invention. The image signal processing IC 10 of the eleventh embodiment is essentially the same configuration as that of the ninth embodiment shown in Fig. 18, except for the following points.

In the image signal processing IC 10 shown in Fig. 20, subsequent to the latch circuits 25E, 25R, 25G, and 25B immediately before the output terminals 16E, 16R, 16G, and 16B shown in Fig. 18 are connected, respectively, low-voltage differential signaling (LVDS) circuits 30E, 30R, 30G, and 30B that convert input parallel data to serial data, and then to differential signals of low amplitude (low voltage). Outputs of the respective LVDS circuits 30E, 30R, 30G, and 30B are output as low-amplitude differential signals of four systems, LVEX+/LVEX-, LVR+/LVR-, LVG+/LVG-, and LVB+/LVB-, and the reference clock MCLK is also output, although not serialized, as low-amplitude differential signals LVCKG+/LVCK- through an LVDS circuit 30K.

A phase-lock loop (PLL) circuit 31 generates a serialization clock LVCK that is necessary for serialization performed by the LVDS circuits 30E, 30R, 30G, and 30B, by multiplying the reference clock MCLK by n, where "n" is the number of bits of input parallel data that is to be serialized by the LVDS circuit.

According to the eleventh embodiment, image data to be output is a serialized low-amplitude differential signal. Therefore, compared with the case where parallel image data DRO, DGO, and DBO of respective colors are output, the number of terminals required in the image signal processing IC 10 is significantly reduced, and the miniaturization of a package can be achieved.

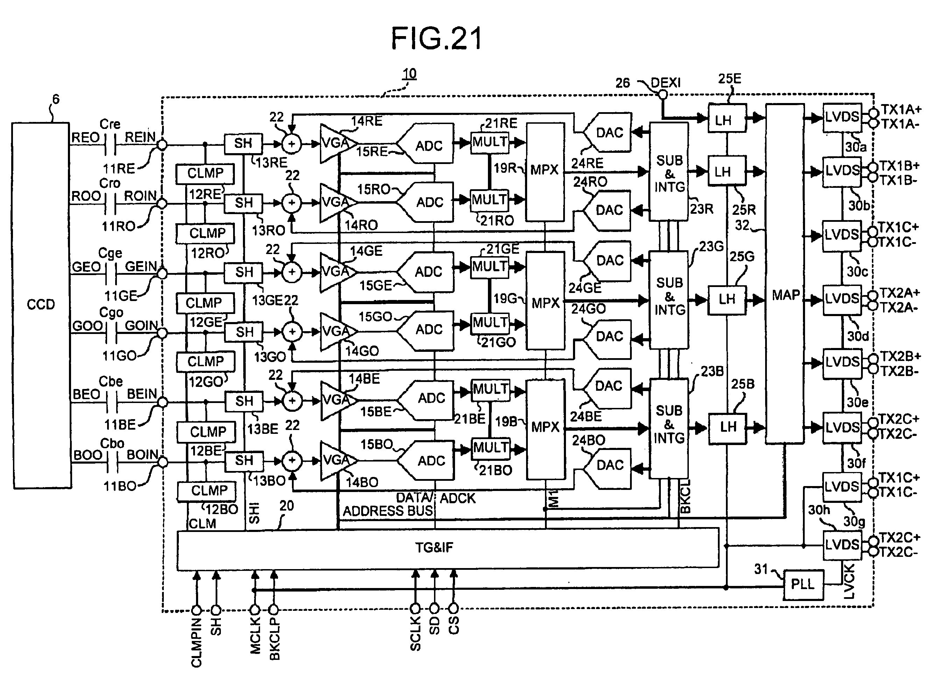

Fig. 21 is a block diagram of an image signal processing IC according to a twelfth embodiment of the present invention. The image signal processing IC 10 of the twelfth embodiment is of essentially the same configuration as that of the eleventh embodiment shown in Fig. 20, except for the following points.

In the image signal processing IC 10 shown in Fig. 21, a common mapping circuit (MAP) 32 is connected on the output side of the latch circuits 25R, 25G, and 25B that latch the respective outputs from the SUB&INTG circuits 23R, 23G, and 23B of respective systems shown in Fig. 20, and the latch circuit 25E that latches the external digital signal DEXI input through the external input terminal 26. Six outputs of the mapping circuit 32 are connected to six LVDS circuits 30a to 30f, respectively.

The outputs of the LVDS circuits 30a to 30f are output as low-amplitude differential signals TX1A+/TX1A-, TX1B+/TX1B-, TX1C+/TX1C-, TX2A+/TX2A-, TX2B+/TX2B-, and TX2C+/TX2C-, and the reference clock MCLK is also output as low-amplitude differential signals TX1CK+/TX1CK- and TX2CK+/TX2CK- by two LVDS circuits 30g and 30h. In this example, the external digital signal DEXI is 5 bits, the parallel image data output by each of the SUB&INTG circuit 23R, 23G, and 23B of each system is 10 bits, and the input of each of the LVDS circuits 30a to 30f is 7 bits. Therefore, in this case, the PLL circuit 31 multiplies the reference clock MCLK by 7.

The mapping circuit 32 is connected to the data/address bus from the TG&IF circuit 20, and maps the input data 35 bits (5 bits+10 bits*3) to the output data 42 bits (7 bits*6), corresponding to the data/address bus.

Since the output includes information indicative of "H/L" and multiplex allocation, the number of bits of the input data and the output data differs.

According to the twelfth embodiment, more than one or arbitrary patterns of serialization can be selected or designated. Therefore, the flexibility of the configuration (receiver of the low-amplitude differential signal) in a subsequent stage increases. Accordingly, configuration required for cost reduction of an image reading device and improvement of reliability is enabled.

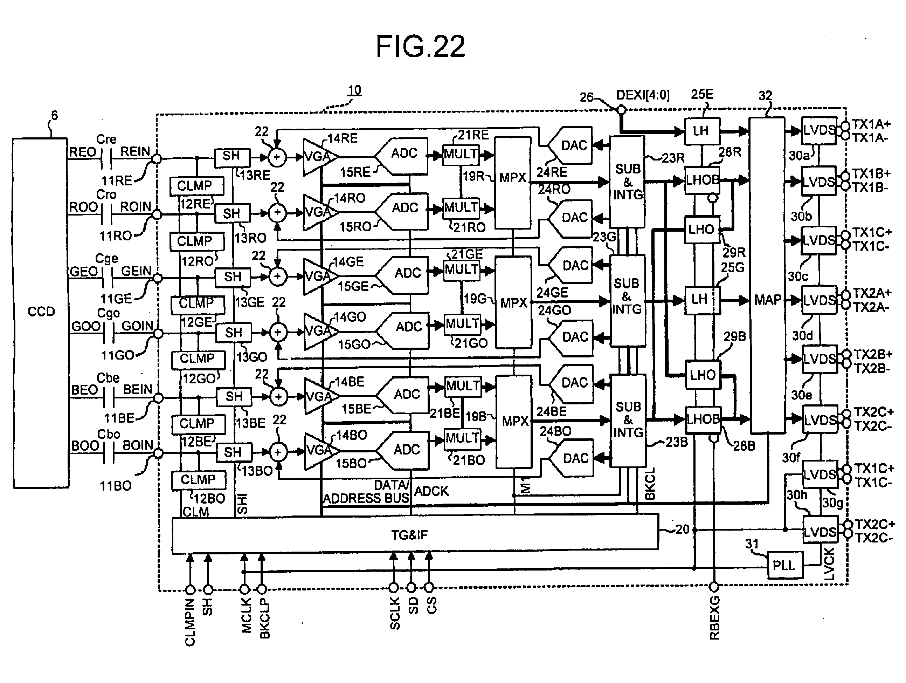

Fig. 22 is a block diagram of an image signal processing IC according to a thirteenth embodiment of the present invention. The image signal processing IC 10 of the thirteenth embodiment is in a way a combination of the twelfth embodiment (Fig. 21) and the tenth embodiment (Fig. 19).

Specifically, in the image signal processing IC 10 shown in Fig. 22, the latch circuit arranged immediately before the mapping circuit 32 in the system of the input signal REIN/ROIN shown in Fig. 21 is an output control latch circuit (LHOB) 28R of an active "L" whose output becomes "H" to be high impedance when a control signal is "L". In parallel to this latch circuit, an output control latch circuit (LHO) 29R of an active "H" whose output becomes "L" to be high impedance when the control signal is "H" is connected, and an input terminal thereof is connected to the output terminal of the SUB&INTG circuit 23B in the system of the input signal BEIN/BOIN.

Further, the latch circuit arranged immediately before the mapping circuit 32 in the system of the input signal BEIN/BOIN is an output control latch circuit (LHOB) 28B of an active "L", an output control latch circuit (LHO) 29B of an active "H" is connected in parallel thereto, and an input terminal thereof is connected to the output terminal of the SUB&INTG circuit 23R in the system of the input signal REIN/ROIN. The control terminals of the output control latch circuits (LHOB) 28R and 28B and the output control latch circuits (LHO) 29R and 29B are connected to the external terminal RBEXG.

Therefore, according to the thirteenth embodiment, by controlling the external terminal RBEXG, output signals similar to that in the twelfth embodiment (Fig. 21) can be output switching contents of the system of the input signal REIN/ROIN and the system of the input signal BEIN/BOIN.

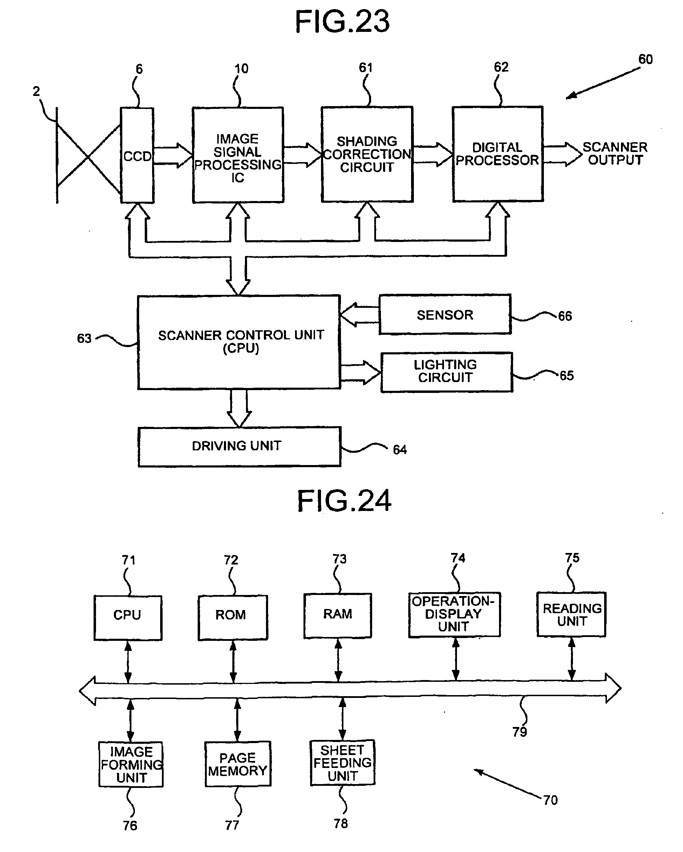

Fig. 23 is a block diagram of an image reading device 60 that includes the image signal processing IC 10 according to the embodiments.

The image reading device 60 includes the scanning optical system shown in Fig. 2 in which the CCD 6 converts color image data of the original 2 to electrical signals of three primary colors, and the image signal processing IC 10 of any one of the embodiments that processes the signals output from the CCD 6.

The image reading device 60 further includes, as an image signal system, a shading correction circuit 61 and a digital processor 62 subsequent to the image signal processing IC 10. The shading correction circuit 61 stores data read from the reference white plate 8 in a memory as the shading correction data to correct variation in light distribution of the light source 7 shown in Fig. 2 and sensitivity of each pixel of the CCD 6 for the digital image data output from the image signal processing IC 10, and reads the correction data from the memory, when reading the original 2, to perform the shading correction. The digital processor 62 performs image processing such as scaling, y conversion, and color conversion, and transmits the image data as a scanner output to a personal computer, a printer, or the like (not shown).

The image reading device 60 further includes a scanner control unit 63 (CPU), a driving unit 64 that drives the first moving body 3 and the second moving body 4 shown in Fig. 2, a cooling fan, and the like, a lighting circuit 65 that lights the light source 7 such as a fluorescent light and a lamp, and a sensor 66 that detects a home position of the moving bodies, temperature of the light source, and the like. The scanner control unit 63 controls the image signal system described above, and the operation and the timing of these components.

The image reading device 60 is of basically the same configuration and operates in the same manner as a conventional image reading device except for the image signal processing IC 10. Therefore, detailed explanations thereof are omitted.

With the image reading device 60 including the image signal processing IC 10, less mounting space is required on a printed board, resulting in higher design flexibility, as explained in the above embodiments. In addition, because image signals in two systems for each of three colors are processed in the same IC, a difference in characteristics between the processing systems is small. Thus, signal processing can be performed at a low cost. Accordingly, a compact and high-performance image reading device can be provided at a low price.

Fig. 24 is a schematic diagram of a hardware configuration of an image forming apparatus 70 including the image reading device 60. The image forming apparatus 70 can be realized by executing a computer program on a microcomputer. Such microcomputer includes a CPU 71 for overall control, a read only memory (ROM) 72 that stores therein an operation program of the CPU 71, a random access memory (RAM) 73 that stores therein various kinds of data concerning the operation of the apparatus and that serves as a working memory of the CPU 71, and a bus 79 that connects these components.

The image forming apparatus 70 further includes an operation-display unit 74, a reading unit 75, an image forming unit 76, a page memory 77, and a sheet feeding unit 78. These components are also connected to the CPU 71 and to each other through the bus 79.

The operation-display unit 74 includes, for example, a liquid crystal display (LCD) that displays various types of information, and an input device such as a keyboard and a touch panel through which input is provided from an operator.

The reading unit 75 corresponds to the image reading device 60. The reading unit 75 optically reads a color image of an original to output digital image data corresponding to three primary colors, and stores the image data in the page memory 77 of each color under the control of the CPU 71.

The image forming unit 76 is a plotter such as a laser printer and an ink jet printer that color-prints the image data stored in each of the page memories 77 on a recording sheet. The sheet feeding unit 78 feeds a recoding sheet to the image forming unit 76, and includes a sheet feeding tray, a feeding roller, and a conveyance mechanism.

With the image signal processing IC 10 applied to the reading unit 75, the image forming apparatus 70 can achieve various effects as noted above. Therefore, a compact high-performance image forming apparatus can be provided at a low price.

The image forming apparatus 70 can be any of digital copier, facsimile machine, and MFP that combines any or all of the functions of copier, facsimile machine, printer, scanner and the like.

As set forth hereinabove, according to an embodiment of the present invention, an image signal processing IC enables digitalization of all image signals with one image signal processing IC in a color linear image sensor that can read three colors of RGB and outputs analog image signals of two systems per color. Therefore, less mounting space is required on a printed board, resulting in higher design flexibility. Moreover, a difference in characteristics between the processing systems can be reduced, and high-performance signal processing can be achieved at a low cost.

Although the invention has been described with respect to a specific embodiment for a complete and clear disclosure, the appended claims are not to be thus limited but are to be construed as embodying all modifications and alternative constructions that may occur to one skilled in the art that fall within the basic teaching herein set forth.

## Claims

1. A signal processing integrated circuit (10) adapted to receive analog signals from a color linear image sensor (6) that converts incident light to three pairs of analog electrical signals, each pair comprising even-numbered and add-numbered pixel signals an corresponding to a respective one of three colors, the signal processing integrated circuit comprising:
three pairs of input-signal processing systems, each pair of systems corresponding to a respective one of the three colors, and each input signal processing system including one sample-and-hold circuit (13RE, 13RO, 13GE, 13GO, 13BE, 13BO) adapted to receive an analog signal of corresponding color from the color linear image sensor (6), and to sample and hold a specified region of the analog signal
three multiplexer circuits (17R, 17G, 17B), each said multiplexer circuit (17R, 17G, 17B) being connected to a respective one of the three pairs of input-signal processing systems and being adapted to receive the analog signals from the corresponding pair of sample-and-hold circuits (13RE, 13RO, 13GE, 13GO, 13BE, 13BO) and alternately select and output the received analog signals for each color in accordance with a control signal, thereby integrating the two input-signals of each pair into one signal of corresponding color;
one variable gain amplifier (14R, 14G, 14B) for each color, wherein each variable gain amplifier (14R, 14G, 14B) is adapted to amplify said analog multiplexed signals ; and
one analog-to-digital converter circuit (15R, 15G, 15B) for each color, wherein each analog-to-digital converter circuit (15R, 15G, 15B) corresponds to a respective once of the variable gain amplifiers and is adapted to convert a respective amplified analog signal to digital signal, wherein
the variable gain amplifiers (14R, 14G, 14B) and the analog-to-digital converter circuits (15R, 15G, 15B) are located on an output side of the multiplexer circuits (17R, 17G, 17B);
**characterized by** further comprising a mode-selecting unit that is adapted to select a one-system mode, in which the multiplexer circuits (19R, 19G, 193) output a signal of only one of each pair of received analog signals for each color , or a two-system mode, in which the multiplexer circuits (19R, 19G, 193) alternately output signals of both of each pair of received analog signals for each color;
and further comprising a power control unit adapted to cut off or reduce a power supply to the sample-and-hold circuits corresponding to the received analog signals that are disregarded when the mode-selecting unit selects the one-system made.

2. A signal processing integrated circuit (10) according to claim 1, further comprising a register (18R, 18G, 18B) for each of the three colours, each said register (18R, 18G, 18B) being adapted to store therein a gain value set with respect to a respective one of the colors, wherein
the variable gain amplifiers (14RE, 14RO, 14GE, 14GO, 14BE, 14BO) are each adapted to amplify a respective said analog signal by a gain factor corresponding to the gain value for its associated colour.

3. A signal processing integrated circuit (10) according to claim 1 or claim 2, further comprising a timing control unit adapted to control sampling start timing and hold start timing of the sample-and-hold circuits (13RE, 13RO, 13GE, 13GO, 13BE, 13BO) based on a sampling start signal and a hold start signal.

4. A signal processing integrated circuit (10) according to claim 3, wherein
the sampling start signal is a rectangular wave signal, and determines the sampling start timing by an active edge of the sampling start signal, and
the hold start signal is a rectangular wave signal, and determines the hold start timing by an active edge of the hold start signal, the image signal processing integrated circuit (10) further comprising:
a polarity selecting unit adapted to select a polarity of the active edge of each of the rectangular wave signals;

5. A signal processing integrated circuit (10) according to claim 1, wherein
the variable gain amplifiers (14RE, 14RO, 14GE, 14GO, 14BE, boy and the analog-to-digital converter circuits (15RE, 15RO, 15GE, 15GO, 15BE, 15BO) are located on the input side of the multiplexer circuits (19R, 19G, 19B), and
the variable gain amplifiers (14RE, 14RO, 14GE, 14GO, 14BE, 14BO) are provided with a register (18R, 18G, 18B) for each color that is adapted to store therein a gain value set independently for each of the two systems, the signal processing integrated circuit (10) further comprising:
a coefficient multiplier (21RE, 21RO, 21GE, 21GO, 21BE, 21BO) that is located between each said analog-to-digital converter circuit (15RE, 15RO, 15GE, 15GO, 15BE, 15BO) and a respective said multiplexer circuit (19R, 19G, 19B); and
a setting unit that is adapted to set the gain value and a multiplication coefficient of the coefficient multipliers (21RE, 21RO, 21GE, 21GO, 21BE, 21BO) independently for each of the two systems.

6. A signal processing integrated circuit (10) according to any one of claims 1 to 5, further comprising:
an offset specifying unit adapted to specify an offset region; and
an offset applying unit adapted to apply an offset to the analog signals that are input to the variable gain amplifiers (14RE, 14RO, 14GE, 14GO, 14BE, 14BO) so that digital data output for each of the colors in the offset region has an offset value specified for the color.

7. A signal processing integrated circuit (10) according to any one of claims 1 to 6, further comprising a synchronization output unit adapted to generate a clock signal having a frequency identical to a data rate of digital data output for each of the colors, and output the digital data in synchronization with the clock.

8. A signal processing integrate circuit (10) according to claim 7, further comprising an external input terminal for externally deceiving digital data, wherein
the synchronization output unit is adapted to output the digital data received through the external input terminal and the digital data of each of the colors in synchronization with the clock.

9. A signal processing integrated circuit (10) according to any one of claims 1 to 8, further comprising an output control unit adapted to selectively output digital data of two of the three colors based on a terminal or a register (18R, 18G, 18B) determining an operation mode and a state of the terminal or the register (18R, 18G, 18B).

10. A signal processing integrated circuit (10) according to any one of claims 1 to 9, further comprising a low-voltage differential signaling circuit (3CE, 30R, 30G, 30B, 30K) adapted to serialize a plurality of bits of digital data of each of the colors into serial signals, and convert the serial signals to low-amplitude differential signals to output serial low-amplitude differential signals for each of the colors.

11. A signal processing integrated circuit (10) according to claim 10, further comprising a pattern selecting unit adapted to select a serialization pattern from patterns of serialization performed by the low-voltage differential signaling circuit (30E, 30R, 3CG, 30B, 30K).

12. An image reading device (60) comprising:
an image signal processing integrated circuit (10) according to any one of claims 1 to 11; and
a color linear image sensor (6) adapted to optically read image data, convert the image data to analog electrical signals corresponding to the three colors, and output the analog signals to the image signal processing integrated circuit (10).

13. An image forming apparatus (70) comprising:
an image reading device (60) according to claim 12 constituting an image reading unit (75); and
an image forming unit (76) adapted to form an image on a recording medium based on digital data output from the image reading unit.

## Patentansprüche

1. Integrierte Signalverarbeitungsschaltung (10), die eingerichtet ist, um analoge Signale von einem linearen Farbbildsensor (6) zu empfangen, die einfallendes Licht in drei Paare von analogen elektrischen Signalen umwandelt, wobei jedes Paar geradzahlige und ungeradzahlige Pixelsignale umfasst und einer jeweiligen von drei Farben entspricht, wobei die integrierte Signalverarbeitungsschaltung umfasst:
drei Paare von Eingabesignalverarbeitungssystemen, wobei jedes Systempaar einer jeweiligen der drei Farben entspricht und wobei jedes Eingabesignalverarbeitungssystem eine Abtast- und Halteschaltung (13RE, 13RO, 13GE, 13GO, 13BE, 13BO) enthält, die eingerichtet ist, um ein analoges Signal einer entsprechenden Farbe vom linearen Farbbildsensor (6) zu empfangen und einen festgelegten Bereich des analogen Signals abzutasten und zu haltern;
drei Multiplexer Schaltungen (17R, 17G, 17B), wobei jede Multiplexer-Schaltung (17R, 17G, 17B) mit einem jeweiligen der drei Paare von Bingabesignalvezarbeitungssystemen verbunden und eingerichtet ist, um die analogen Signale vom jeweiligen Paar von Abtast- und Halteschaltungen (13RE, 13RO, 13GE, 13GO, 13BE, 13BO) zu empfangen und die empfangenen analogen Signale für jede Farbe gemäß einem Steuersignal alternierend auszuwählen und auszugeben, wodurch die beiden Eingabesignal von jedem Paar in ein Signal entsprechender Farbe integriert weiden;
einen Verstärker (14R, 14G, 14B) mit variabler Verstärkung für jede Farbe, wobei jeder Verstärker (14R, 14G, 14B) mit variabler Verstärkung eingerichtet ist, um die analogen multiplexierten Signale zu verstärken; und
eine Analog-Digital-Wandler-Schaltung (15R, 15G, 15B) für jede Farbe, wobei jede Analog-Digital-Wandler-Schaltung (15R, 15G, 15B) einem jeweiligen der Verstärker mit variabler Verstärkung entspricht und eingerichtet ist, um ein jeweiliges verstärktes analoges Signal in ein digitales Signal umzuwandeln, wobei
die Verstärker (14R, 14G, 14B) mit variabler Verstärkung und die Analog-Digital-Wandler-Schaltungen (15R, 15G, 15B) auf einer Ausgabeseite der Multiplexer-Schaltungen (17R, 17G, 17B) angeordnet sind;
**dadurch gekennzeichnet, dass** sie ferner eine Modusauswahleinheit umfasst, die eingerichtet ist, um einen Ein-System-Modus, wobei die Multiplexer-Schaltungen (19R, 19G, 19B) ein Signal von nur einem jedes Paars von empfangenen analogen Signalen für jede Farbe ausgeben, oder einen Zwei-System-Modus, wobei die Multiplexer-Schaltungen (19R, 19G, 19B) alternierend Signale von beiden jedes Paares von empfangenen analogen Signalen für jede Farbe ausgeben, auszuwählen;
und dass sie ferner eine Leistungsregeleinheit umfasst, die eingerichtet ist, um eine Leistungsversorgung zu den Abtast- und Halteschaltungen, die den empfangenen analogen Signalen entsprechen, die nicht berücksichtigt werden, wenn die Modusauswahleinheit den Ein-System-Modus auswählt, zu stoppen oder zu verringern.

2. Integrierte Signalverarbeitungsschaltung (10) nach Anspruch 1, ferner umfassend ein Register (18R, 18G, 18B) für jede der drei Farben, wobei jedes Register (18R, 18G, 18B) eingerichtet ist, um darin einen Verstärkungswert zu speichern, der in Bezug auf eine jeweilige der Farben eingestellt wird, wobei
die Verstärker (14RE, 14RO, 14GE, 14GO, 14BE, 14BO) mit variabler Verstärkung jeweils eingerichtet sind, um ein jeweiliges analoges Signal um einen Verstärkungsfaktor zu verstärken, der dem Verstärkungswert für dessen assoziierte Farbe entspricht.

3. Integrierte Signalverarbeitungsschaltung (10) nach Anspruch 1 oder 2, ferner umfassend eine Zeitsteuereinheit, die eingerichtet ist, um die Abtast-Startzeit und die Halte-Startzeit der Abtast- und Halteschaltungen (13RE, 13RO, 13GE, 13GO, 13BE, 13BO) auf Basis eines Abtast-Startsignals und eines Halte-Startsignals zu steuern.

4. Integrierte Signalverarbeitungsschaltung (10) nach Anspruch 3, wobei
das Abtast-Startsignal ein Signal mit rechteckiger Wellenform ist und die Abtast-Startzeit durch eine aktive Flanke des Abtast-Startsignals bestimmt, und
das Halte-Startsignal ein Signal mit rechteckiger Wellenform ist und die Halte-Startzeit durch eine aktive Flanke des Halte-Startsignals bestimmt, wobei die integrierte Signalverarbeitungsschaltung (10) ferner umfasst:
eine Polaritätsauswahleinheit, die eingerichtet ist, um eine Polarität der aktiven Flanke von jedem der Signale mit rechteckiger Wellenform auszuwählen.

5. Integrierte Signalverarbeitungsschaltung (10) nach Anspruch 1, wobei
die Verstärker (14RE, 14RO, 14GE, 14GO, 14BE, 14BO) mit variabler Verstärkung und die Analog-Digital-Wandler-Schaltungen (15RE, 15RO, 15GE, 15GO, 15BE, 15BO) auf der Eingabeseite der Multiplexer-Schaltungen (19R, 19G, 19B) angeordnet sind, und
die Verstärker (14RE, 14RO, 14GE, 14GO, 14BE, 14BO) mit variabler Verstärkung mit einer Register (18R, 18G, 18B) für jede Farbe versehen sind, das eingerichtet ist, um darin einen Verstarkungswert zu speichern, der unabhängig für jedes der zwei Systeme eingestellt wird, wobei die integrierte Signalverarbeitungsschaltung (10) ferner umfasst:
einen Koeffizientelunuttiplikator (21RE, 21RO, 21GE, 21GO, 21BE, 21BO), der zwischen jeder Analog-Digital-Wandler-Schaltung (15RE, 15RO, 15GE, 15GO, 15BE, 15BO) und einer jeweiligen Multiplexer-Schaltung (19R, 19G, 19B) angeordnet ist; und
eine Einstelleinheit, die eingerichtet ist, um den Verstärkungswert und einen Multiplizierungskoeffizienten der Koeffizientenmultiplikatoren (21RE, 21RO, 21GE, 21GO, 21BE, 21BO) unabhängig für jedes der beiden Systeme einzustellen.

6. Integrierte Signalverarbeitungsschaltung (10) nach einem der Ansprüche 1 bis 5, ferner umfassend:
eine Offset-Festlegungseinheit, die eingerichtet ist, um eine Offset-Region Festzulegen; und
eine Offset-Anwendungseinheit, die eingerichtet ist, um ein Offset auf analoge Signale anzuwenden, die in die Verstärker (14RE, 14RO, 14GE, 14GO, 14BE, 14BO) mit variabler Verstärkung eingehen, so dass eine digitale Datenausgabe für jede der Farben in der Offset-Region einen für die Farbe festgelegten Offset-Wert aufweist.

7. Integrierte Signalverarbeitungsschaltung (10) nach einem der Ansprüche 1 bis 6, ferner umfassend eine Synchronisationsausgabeeinheit, die eingerichtet ist, um ein Taktsignal mit einer zu einer Datenrate von digitaler Datenausgabe identischen Frequenz für jede der Farben zu generieren und die digitalen Daten in Synchronisation mit dem Takt auszugeben.

8. Integrierte Signalverarbeitungsschaltung (10) nach Anspruch 7, ferner umfassend ein externes Hingabetenninal zum externen Empfangen von digitalen Daten, wobei
die Synchronisationsausgabeeinheit eingerichtet ist, um die über das externe Eingabeterminal empfangenen digitalen Daten und die digitalen Daten jeder der Farben in Synchronisation mit dem Takt auszugeben.

9. Integrierte Signalverarbeitungsschaltung (10) nach einem der Ansprüche 1 bis 8, ferner umfassend eine Ausgaberegeleinheit, die eingerichtet ist, um digitale Daten von zweien der drei Farben auf Basis eines Terminals oder eines Registers (18R, 18G, 18B) selektiv auszugeben, wobei ein Betriebsmodus und ein Status des Terminals oder des Registers (18R, 18G, 18B) bestimmt wird.

10. Integrierte Signalverarbeitungseinheit (10) nach einem der Anspruche 1 bis 9, ferner umfassend eine Niederspannungs-Differentialsignatschattung (30E, 30R, 30G, 30B, 30K), die eingerichtet ist, um eine Mehrzahl von Bits von digitalen Daten von jeder der Farben in serielle Signale zu serialisieren und um die seriellen Signale in Differentialsignale mit geringer Amplitude umzuwandeln, um serielle Differentialsignale mit geringer Amplitude für jede der Farben auszugeben.

11. Integrierte Signalverarbeitungsschaltung (10) nach Anspruch 10, ferner umfassend eine Musterauswahleinheit, die eingerichtet ist, um ein Serialisierungsmuster aus Serialisierungsmustern auszuwählen, die von der Niederspannungs-Differentialsignalschaltung (30E, 30R, 30G, 30B, 30K) durchgeführt wurden.

12. Bildlesevorrichtung (60), umfassend:
eine integrierte Bildsignalverarbeitungsschaltung (10) nach einem der Ansprüche 1 bis 11; und
einen linearen Farbbildsensor (6), der eingerichtet ist, um Bilddaten optisch auszulesen, die Bilddaten in analoge elektrische Signale umzuwandeln, die den drei Farben entsprechen, und die analogen Signale an die integrierte Bildsignalverarbeitungsschaltung (10) auszugeben.

13. Bildformungsvorrichtung (70), umfassend:
eine Bildlesevorrichtung (60) nach Anspruch 12, die eine Bildleseeinheit (75) darstellt; und
eine Bildformungseinheit (76), die eingerichtet ist, um ein Bild auf einem Aufzeichnungsmedium auf Basis der digitalen Datenausgabe von der Bildleseeinheit zu formen

## Revendications

1. Circuit intégré de traitement de signaux (10) conçu pour recevoir des signaux analogiques d'un capteur d'image linéaire couleur (6) qui convertit la lumière incidente en trois paires de signaux électriques analogiques, chaque paire comprenant des signaux de pixels de nombre pair et de nombre impair correspondant à une couleur respective de trois couleurs, le circuit intégré de traitement de signaux comprenant :
trois paires de systèmes de traitement de signaux d'entrée, chaque paire de systèmes correspondant à une couleur respective des trois couleurs, et chaque système de traitement de signaux d'entrée incluant un circuit échantillonneur-bloqueur (13RE, 13RO, 13GE, 13GO, 13BE, 13BO) conçu pour recevoir un signal analogique de la couleur correspondante du capteur d'image linéaire couleur (6) et pour échantillonner et bloquer une région spécifiée du signal analogique ;
trois circuits multiplexeurs (17R, 17G, 17B), chacune desdits circuits multiplexeurs (17R, 17G, 17B) étant connecté à une paire respective des trois paires de systèmes de traitement de signaux d'entrée et étant conçu pour recevoir les signaux analogiques de la paire correspondante de circuits échantillonneurs-bloqueurs (13RE, 13RO, 13GE, 13GO, 13BE, 13BO) et sélectionner et produire en sortie alternativement les signaux analogiques reçus pour chaque couleur en fonction d'un signal de commande, intégrant de ce fait les deux signaux d'entrée de chaque paire en un signal de couleur correspondante ;
un amplificateur à gain variable (14R, 14G, 14B) pour chaque couleur, chaque amplificateur de gain variable (14R, 14G, 14B) étant conçu pour amplifier lesdits signaux analogiques multiplexés ; et
un circuit convertisseur analogique-numérique (15R, 15G, 15B) pour chaque couleur, le circuit convertisseur analogique-numérique (15R, 15G, 15B) correspondant à un amplificateur respectif des amplificateurs à gain variable et étant conçu pour convertir un signal analogique amplifié respectif en un signal numérique, dans lequel
les amplificateurs à gain variable (14R, 14G, 14B) et les circuits convertisseurs analogique-numérique (15R, 15G, 15B) se trouvent sur un côté de sortie des circuits multiplexeurs (17R, 17G, 17B) ;
**caractérisé en ce qu'**il comprend en outre une unité de sélection de mode qui est conçue pour sélectionner un mode à système unique, dans lequel les circuits multiplexeurs (19R, 19G, 19B) produisent en sortie un signal d'un seul de chaque paire de signaux analogiques reçus pour chaque couleur ou un mode à deux systèmes, dans lequel les circuits multiplexeurs (19R, 19G, 19B) produisent en sortie alternativement les signaux des deux de chaque paire de signaux analogiques reçus pour chaque couleur,
et comprenant en outre une unité de contrôle de puissance conçue pour couper ou réduire une alimentation vers les circuits échantillonneurs-bloqueurs correspondant aux signaux analogiques reçus qui sont ignorés lorsque l'unité de sélection de mode sélectionne le mode à système unique.

2. Circuit intégré de traitement de signaux (10) selon la revendication 1, comprenant en outre un registre (18R, 18G, 18B) pour chacune des trois couleurs, chaque dit registre (18R, 18G, 18B) étant conçu pour stocker une valeur de gain définie par rapport à une couleur respective des couleurs, dans lequel
les amplificateurs à gain variable (14RE, 14RO, 14GE, 14GO, 14BE, 14BO) sont chacun conçus pour amplifier un dit signal analogique respectif au moyen d'un facteur de gain correspondant la valeur de gain pour sa couleur associée.

3. Circuit intégré de traitement de signaux (10) selon la revendication 1 ou la revendication 2, comprenant en outre une unité de contrôle de temporisation conçue pour contrôler le moment de démarrage de l'échantillonnage et le moment de démarrage du blocage des circuits échantillonneurs-bloqueurs (13RE, 13RO, 13GE, 13GO, 13BE, 13BO) sur la base d'un signal de démarrage de l'échantillonnage et d'un signal de démarrage du blocage.

4. Circuit intégré de traitement de signaux (10) selon la revendication 3, dans lequel le signal de démarrage de l'échantillonnage est un signal d'onde rectangulaire, et détermine le moment de démarrage de l'échantillonnage par une arête active du signal de démarrage de l'échantillonnage, et
le signal de démarrage du blocage est un signal d'onde rectangulaire, et détermine le moment de démarrage du blocage par une arête active du signal de démarrage du blocage, le circuit intégré de traitement de signaux d'image (10) comprenant en outre :
une unité de sélection de polarité conçue pour sélectionner une polarité de l'arête active de chacun des signaux d'onde rectangulaire.

5. Circuit intégré de traitement de signaux (10) selon la revendication 1, dans lequel les amplificateurs à gain variable (14RE, 14RO, 14GE, 14GO, 14BE, 14BO) et les circuits convertisseurs aniogique-numérique (15RE, 15RO, 15GE, 15GO, 15BE, 15BO) se trouvent sur le côté entrée des circuits multiplexeurs (19R, 19G, 19B), et
les amplificateurs à gain variable (14RE, 14RO, 14GE, 14GO, 14BE, 14BO) sont dotés d'un registre (18R, 18G, 18B) pour chaque couleur qui est conçu pour stocker une valeur de gain définie indépendamment pour chacun des deux systèmes, le circuit intégré de traitement de signaux (10) comprenant en outre ;
un multiplicateur de coefficient (21RE, 21RO, 21GE, 21GO, 21BE, 21BO) qui se trouve entre chaque dit circuit convertisseur analogique-numérique (15RE, 15RO, 15GE, 15GO, 15BE, 15BO) et un dit circuit multiplexeur respectif (19R, 19G, 19B) ; et
une unité de réglage qui est conçue pour régler la valeur de gain et un coefficient de multiplication des multiplicateurs de coefficient (21RE, 21RO, 21GE, 21GO, 21BE, 21BO) indépendamment pour chacun des deux systèmes

6. Circuit intégré de traitement de signaux (10) selon l'une quelconque des revendications 1 à 5, comprenant en outre :
une unité de spécification de décalage conçue pour spécifier une région de décalage ; et
une unité d'application de décalage conçue pour appliquer un décalage aux signaux analogiques qui sont entrés dans les amplificateurs à gain variable (14RE, 14RO, 14GE, 14GO, 14BE, 14BO) afin que les données numériques produites en sortie pour chacune des couleurs dans la région de décalage ait une valeur de décalage spécifiée pour la couleur.

7. Circuit intégré de traitement de signaux (10) selon l'une quelconque des revendications 1 à 6, comprenant en outre une unité de sortie de synchronisation conçue pour générer un signal d'horloge ayant une fréquence identique à un débit de données des données numériques produites en sortie pour chacune des couleurs, et produire en sortie les données numériques en synchronisation avec l'horloge.

8. Circuit intégré de traitement de signaux (10) selon la revendication 7, comprenant en outre un terminal d'entrée externe pour recevoir de l'extérieur des données numériques, dans lequel
l'unité de sortie de synchronisation est conçue pour produire en sortie les données numériques reçues par le biais du terminal d'entrée externe et les données numériques de chacune des couleurs en synchronisation avec l'horloge.

9. Circuit intégré de traitement de signaux (10) selon l'une quelconque des revendications 1 à 8, comprenant en outre une unité de contrôle de sortie conçue pour produire sélectivement en sortie des données numériques de deux des trois couleurs sur la base d'un terminal ou d'un registre (18R, 18G, 18B) déterminant un mode de fonctionnement et un état du terminal ou du registre (18R, 18G, 18B).

10. Circuit intégré de traitement de signaux (10) selon l'une quelconque des revendications 1 à 9, comprenant en outre un circuit de signalisation différentielle de basse tension (30E, 30R, 30G, 30B, 30K) conçu pour sérialiser une pluralité de bits de données numériques de chacune des couleurs en signaux sériels, et convertir les signaux sériels en signaux différentiels de faible amplitude pour produire en sortie des signaux différentiels de faible amplitude sériels pour chacune des couleurs.

11. Circuit intégré de traitement de signaux (10) selon la revendication 10, comprenant en outre une unité de sélection de modèle conçue pour sélectionner un modèle de sérialisation à partir de modèles de sérialisation réalisés par le circuit de signalisation différentielle de basse tension (30E, 30R, 30G, 30B, 30K).

12. Dispositif de lecture d'image (60) comprenant:
un circuit intégré de traitement de signaux d'image (10) selon l'une quelconque des revendications 1 à 11 ; et
un capteur d'image linéaire couleur (6) conçu pour lire optiquement les données d'image, convertir les données d'image en signaux électriques analogiques correspondant aux trois couleurs, et produire en sortie les signaux analogiques vers le circuit intégré de traitement de signaux d'image (10).

13. Appareil de formation d'image (70) comprenant :
un dispositif de lecture d'image (60) selon la revendication 12 constituant une unité de lecture d'image (75) ; et
une unité de formation d'image (76) conçue pour former une image sur un support d'enregistrement sur la base des données numériques produites en sortie à partir de l'unité de lecture d'image.
